(19) Europäisches Patentamt
European Patent Office
Office européen des brevets

(11) **EP 2 952 525 B1**

(12) **EUROPEAN PATENT SPECIFICATION**

(45) Date of publication and mention of the grant of the patent:
**10.05.2017 Bulletin 2017/19**

(21) Application number: **15167487.6**

(22) Date of filing: **13.05.2015**

(51) Int Cl.:
*C08C 19/25 (2006.01)*
*B60C 1/00 (2006.01)*
*C08F 236/04 (2006.01)*
*C08F 236/06 (2006.01)*
*C08L 9/00 (2006.01)*
*B60C 11/00 (2006.01)*
*C08L 7/00 (2006.01)*
*C08L 47/00 (2006.01)*

(54) **STUDLESS WINTER TIRE**

SPIKELOSER WINTERREIFEN

PNEU D'HIVER SANS CLOU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.05.2014 JP 2014101568**
**18.03.2015 JP 2015055205**

(43) Date of publication of application:
**09.12.2015 Bulletin 2015/50**

(73) Proprietor: **SUMITOMO RUBBER INDUSTRIES, LTD.**
**Kobe-shi, Hyogo-ken, 651-0072 (JP)**

(72) Inventors:
- **Kojima, Ryoji**
**Kobe-shi, Hyogo 651-0072 (JP)**
- **Takenaka, Mikako**
**Kobe-shi, Hyogo 651-0072 (JP)**
- **Ishino, Soh**
**Kobe-shi, Hyogo 651-0072 (JP)**

(74) Representative: **Manitz Finsterwald Patentanwälte PartmbB**
**Martin-Greif-Strasse 1**
**80336 München (DE)**

(56) References cited:
**EP-A1- 1 958 971**
**EP-A1- 2 042 549**
**EP-A1- 2 098 540**
**EP-A1- 2 098 541**
**EP-A1- 2 193 938**
**EP-A1- 2 404 944**
**EP-A1- 2 407 507**
**US-A1- 2011 015 302**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 952 525 B1

## Description

TECHNICAL FIELD

The present invention relates to studless winter tires including a tread or base tread formed from a specific rubber composition.

BACKGROUND ART

Studded tires or snow chains on tires were used for driving on snowy and icy roads; however, they unfortunately cause environmental problems, such as dust pollution. Studless winter tires were thus developed as alternative tires for driving on snowy and icy roads. Since studless winter tires are for use on snowy roads with rougher surfaces than normal roads, the material and structure of treads, which contact road surfaces, are specially designed. For example, rubber compositions for treads have been developed that contain a diene rubber having excellent low-temperature properties and further contain silica to reduce an increase in hardness at low temperatures. Among diene rubbers, high-cis polybutadiene rubber is often used to pursue low-temperature properties.

Some attempts have been made to enhance the performance on ice and snow of studless winter tires, for example, by increasing the amount of polybutadiene rubber in the rubber composition for treads. However, too large an amount of polybutadiene rubber causes an excessively high mobility in the rubber, resulting in blooming of chemical agents. Thus, there has been a limit to the amount of polybutadiene rubber which can be increased. Also, in the case of increasing the amount of polybutadiene rubber, the increase in the amount of polybutadiene rubber is accompanied by a decrease in the proportion of natural rubber in the rubber composition, which unfortunately results in insufficient rubber strength and poor abrasion resistance.

Another possible approach for enhancing the performance on ice and snow of studless winter tires is to increase the amount of silica. However, an increase in the amount of silica brings difficulties in ensuring silica dispersibility in the rubber composition for treads, and therefore adversely affects and deteriorates abrasion resistance.

As described above, the conventional rubber compositions for treads of studless winter tires still leave room for improvement.

Moreover, when a multi-layered tread, e.g., a two-layered tread consisting of a cap tread (outer surface layer) and a base tread (inner surface layer), is used, the outermost layer, cap tread, may suffer the same problems as described above. Further, since the inner layer other than the cap tread, i.e. base tread, often contains carbon black to maintain durability, if the cap tread is worn away so that the base tread is exposed, the performance on ice and snow may be greatly reduced.

A method for enhancing the performance on ice and snow of base treads may include addition of silica as mentioned for cap treads. However, base treads containing silica may have poor durability because fracture initiation sites may be created inside the rubber due to lower tensile properties.

As described above, the conventional rubber compositions for base treads of studless winter tires also still leave room for improvement.

US 2011/0015302 A1 discloses a method for producing a modified conjugated diene polymer comprising (A) subjecting a conjugated diene polymer having a cis-1,4-bond content of 98.5% or more and possessing an active end to a modification reaction to introduce an alkoxysilane compound having two or more reactive groups including an alkoxysilyl group into the active end of the conjugated diene polymer, and (B) subjecting the residue of the alkoxysilane compound introduced into the active end to a condensation reaction in the presence of a condensation catalyst that includes at least one element selected from the elements of the groups 4A, 2B, 3B, 4B, and 5B of the periodic table.

EP 2 098 541 A1 relates to a method for producing a modified conjugated diene polymer, which is similar to that of US 2011/0015302 A1. The modified conjugated diene polymer may be used in the tread or under-tread of a pneumatic tire.

EP 2 404 944 A1 describes a studless tire with a tread being made of a rubber composition including a polar-group containing copolymer, natural rubber, silica, carbon black and oil.

EP 1 958 971 A1 relates to a process for producing a conjugated diene polymer by polymerizing a high cis-conjugated diene monomer with a rare earth element containing compound, an aluminoxane and or specific organoaluminum compound and an iodine-containing compound.

EP 2 042 549 A1 refers to a rubber composition including an end-modified conjugated diene based polymer, an inorganic silca based powder and a filler.

EP 2 193 938 A1 describes a pneumatic tire having a specific surface roughness.

EP 2 407 507 A1 describes a rubber composition including a modified styrene-butadiene copolymer being end modified with an alkoxysilane compound.

EP 2 098 540 A1 discloses method for producing a modified conjugated diene polymer comprising the reaction

of a conjugated diene polymer with a heterocumulene compound.

## SUMMARY OF INVENTION

## TECHNICAL PROBLEM

As described above, there is still room for improvement in allowing treads (cap treads in the case of multi-layered treads) of studless winter tires to simultaneously have high levels of performance on ice and snow and abrasion resistance. There is also still room for improvement in allowing base treads of studless winter tires to simultaneously have high levels of performance on ice and snow and durability.

The present invention aims to solve the above problems by providing a studless winter tire including a tread (a cap tread in the case of a multi-layered tread) which exhibits a reduced increase in hardness at low temperatures and achieves a balanced improvement in both performance on ice and snow and abrasion resistance. The present invention also aims to provide a studless winter tire including a base tread which exhibits a reduced increase in hardness at low temperatures and achieves a balanced improvement in both performance on ice and snow and durability.

## SOLUTION TO PROBLEM

The present invention relates to a studless winter tire, including a tread formed from a rubber composition, the rubber composition containing:

a rubber component that includes natural rubber and a modified conjugated diene polymer; and
silica,
1 to 12 parts by mass of a silane coupling agent based on 100 parts by mass of the silica,
the modified conjugated diene polymer being produced by a production method including:

> a modification step (A) of performing a modification reaction to introduce an alkoxysilane compound having at least two reactive groups including an alkoxysilyl group, into an active chain end of a terminally active conjugated diene polymer with a cis-1,4-bond content of 94.0% by mass or higher; and
> a condensation step (B) of performing a condensation reaction on a residue of the alkoxysilane compound introduced into the active chain end, in the presence of a condensation catalyst containing at least one element selected from the group consisting of elements of group 4, group 12, group 13, group 14, and group 15 of the periodic table,

the conjugated diene polymer being polymerized in the presence of a catalyst composition mainly containing a mixture of components (a) to (c) below,
the modified conjugated diene polymer having a glass transition temperature of -40°C or lower,
the natural rubber and the modified conjugated diene polymer being present in a combined amount of 20 to 100% by mass based on 100% by mass of the rubber component,
the modified conjugated diene polymer being present in an amount of 10 to 90% by mass based on 100% by mass of the rubber component,
the silica being present in an amount of 1 part by mass or more for each 100 parts by mass of the rubber component,
the component (a) being a lanthanoid-containing compound that contains at least one element selected from the group consisting of lanthanoids, or a reaction product obtained by a reaction between the lanthanoid-containing compound and a Lewis base,
the component (b) being at least one compound selected from the group consisting of aluminoxanes and organoaluminum compounds represented by formula (1): $AlR^1R^2R^3$ wherein $R^1$ and $R^2$ are the same as or different from each other and each represent a $C_1$-$C_{10}$ hydrocarbon group or a hydrogen atom, and $R^3$ is the same as or different from $R^1$ and $R^2$ and represents a $C_1$-$C_{10}$ hydrocarbon group,
the component (c) being an iodine-containing compound that contains at least one iodine atom in its molecular structure,
wherein the rubber composition further comprises a vulcanizing agent and a vulcanization accelerator, and is obtained by mixing and kneading the components other than the vulcanizing agent and the vulcanization accelerator, maintaining them at 150°C to 180°C for 10 to 120 seconds, and further mixing and kneading the resulting kneaded mixture with the vulcanizing agent and the vulcanization accelerator, followed by vulcanization.

Preferably, the conjugated diene polymer has a ratio (Mw/Mn) of weight average molecular weight (Mw) to number average molecular weight (Mn) determined by gel permeation chromatography of 3.5 or less.

Preferably, the conjugated diene polymer has a 1,2-vinyl bond content of 0.5% by mass or less.

Preferably, the condensation catalyst contains titanium (Ti).

Preferably, the alkoxysilane compound contains at least one functional group selected from the group consisting of the following groups (f) to (i):

(f) an epoxy group;
(g) an isocyanato group;
(h) a carbonyl group; and
(i) a cyano group.

Preferably, the modification step (A) includes adding an alkoxysilane compound containing at least one functional group selected from the group consisting of the following groups (j) to (1):

(j) an amino group;
(k) an imino group; and
(1) a mercapto group.

Preferably, the condensation reaction in the condensation step (B) is performed in an aqueous solution with a pH of 9 to 14 and a temperature of 85°C to 180°C.

Preferably, the modified conjugated diene polymer is formed from at least one conjugated diene compound selected from the group consisting of 1,3-butadiene, isoprene, and 2,3-dimethyl-1,3-butadiene.

Preferably, the silica has a nitrogen adsorption specific surface area of 80 to 200 $m^2/g$.

Preferably, the silica is present in an amount of 10 to 80 parts by mass for each 100 parts by mass of the rubber component.

Preferably, the rubber composition further contains oil in an amount of 10 to 50 parts by mass for each 100 parts by mass of the rubber component.

Preferably, the rubber composition has a hardness of 40 to 70 when measured at 0°C with a type A durometer in accordance with JIS K 6253.

The present invention also relates to a studless winter tire, including a base tread formed from a rubber composition,
the rubber composition containing:

a rubber component that includes natural rubber and a modified conjugated diene polymer; and
silica,
1 to 12 parts by mass of a silane coupling agent based on 100 parts by mass of the silica,
the modified conjugated diene polymer being produced by a production method including:

a modification step (A) of performing a modification reaction to introduce an alkoxysilane compound having at least two reactive groups including an alkoxysilyl group, into an active chain end of a terminally active conjugated diene polymer with a cis-1,4-bond content of 94.0% by mass or higher; and
a condensation step (B) of performing a condensation reaction on a residue of the alkoxysilane compound introduced into the active chain end, in the presence of a condensation catalyst containing at least one element selected from the group consisting of elements of group 4, group 12, group 13, group 14, and group 15 of the periodic table,

the conjugated diene polymer being polymerized in the presence of a catalyst composition mainly containing a mixture of components (a) to (c) below,
the modified conjugated diene polymer having a glass transition temperature of -40°C or lower,
the natural rubber and the modified conjugated diene polymer being present in a combined amount of 20 to 100% by mass based on 100% by mass of the rubber component,
the modified conjugated diene polymer being present in an amount of 10 to 90% by mass based on 100% by mass of the rubber component,
the silica being present in an amount of 1 part by mass or more for each 100 parts by mass of the rubber component,
the component (a) being a lanthanoid-containing compound that contains at least one element selected from the group consisting of lanthanoids, or a reaction product obtained by a reaction between the lanthanoid-containing compound and a Lewis base,
the component (b) being at least one compound selected from the group consisting of aluminoxanes and organoaluminum compounds represented by formula (1): $AlR^1R^2R^3$ wherein $R^1$ and $R^2$ are the same as or different from

each other and each represent a $C_1$-$C_{10}$ hydrocarbon group or a hydrogen atom, and $R^3$ is the same as or different from $R^1$ and $R^2$ and represents a $C_1$-$C_{10}$ hydrocarbon group,

the component (c) being an iodine-containing compound that contains at least one iodine atom in its molecular structure,

wherein the rubber composition further comprises a vulcanizing agent and a vulcanization accelerator, and is obtained by mixing and kneading the components other than the vulcanizing agent and the vulcanization accelerator, maintaining them at 150°C to 180°C for 10 to 120 seconds, and further mixing and kneading the resulting kneaded mixture with the vulcanizing agent and the vulcanization accelerator, followed by vulcanization.

ADVANTAGEOUS EFFECTS OF INVENTION

The present invention relates to a studless winter tire including a tread (a cap tread in the case of a multi-layered tread) formed from a rubber composition that contains predetermined amounts of silica and a rubber component including natural rubber and a specific modified conjugated diene polymer. Thus, the studless winter tire provided by the present invention can exhibit a reduced increase in hardness at low temperatures and achieve a balanced improvement in both performance on ice and snow and abrasion resistance. The present invention also relates to a studless winter tire including a base tread formed from a rubber composition that contains predetermined amounts of silica and a rubber component including natural rubber and a specific modified conjugated diene polymer. Thus, the studless winter tire provided by present invention can exhibit a reduced increase in hardness at low temperatures and achieve a balanced improvement in both performance on ice and snow and durability.

DESCRIPTION OF EMBODIMENTS

The studless winter tire of the present invention includes a tread formed from a rubber composition that contains predetermined amounts of silica and a rubber component including natural rubber and a specific modified conjugated diene polymer. Such a studless winter tire can exhibit a reduced increase in hardness at low temperatures and achieve a balanced improvement in performance on ice and snow (grip performance on ice and snow) and abrasion resistance. Moreover, when a multi-layered tread, e.g., a two-layered tread consisting of a cap tread (outer surface layer) and a base tread (inner surface layer), is used, a studless winter tire whose outermost layer, cap tread, is formed from the aforementioned rubber composition can exhibit a reduced increase in hardness at low temperatures and achieve a balanced improvement in performance on ice and snow (grip performance on ice and snow) and abrasion resistance. Furthermore, a studless winter tire in which the aforementioned rubber composition is applied to the inner layer other than the cap tread, i.e. base tread, can exhibit a reduced increase in hardness at low temperatures and achieve a balanced improvement in performance on ice and snow and durability.

If the rubber component in a silica-containing rubber composition is a blend of natural rubber and polybutadiene rubber, the dispersion of silica in the composition is usually limited because silica is unevenly distributed towards the natural rubber phase. Thus, low-temperature properties, abrasion resistance, and tensile properties tend to deteriorate. In contrast, since the rubber composition in the present invention contains silica, and its rubber component includes natural rubber and a specific modified conjugated diene polymer, silica can be distributed and dispersed into both the natural rubber phase and the specific modified conjugated diene polymer phase, so that silica dispersibility can be improved. This is probably the reason why the studless winter tire of the present invention including a tread (a cap tread in the case of a multi-layered tread) formed from such a rubber composition exhibits a reduced stress concentration when the tire is strained, and therefore achieves a balanced improvement in performance on ice and snow and abrasion resistance. For the same reason, a studless winter tire in which the rubber composition in the present invention is applied to the inner layer other than the cap tread, i.e. base tread, can be considered to achieve a balanced improvement in performance on ice and snow and durability.

Unless otherwise stated, the descriptions of the rubber compositions below are about the cases where the rubber compositions are used in common treads, including cap treads and base treads of multi-layered treads as well as single-layered treads.

In the present invention, the combined amount of natural rubber (NR) and the modified conjugated diene polymer is 20 to 100% by mass, and the amount of the modified conjugated diene polymer is 10 to 90% by mass, each based on 100% by mass of the rubber component. Thus, the rubber compositions in the present invention contain NR and the modified conjugated diene polymer, with the amount of the modified conjugated diene polymer falling particularly within a certain range. When the combined amount of NR and the modified conjugated diene polymer, and the amount of the modified conjugated diene polymer fall within such respective ranges, both of sufficient performance on ice and snow and sufficient abrasion resistance or both of sufficient performance on ice and snow and sufficient durability can be achieved.

The lower limit of the combined amount is preferably 30% by mass or more, more preferably 60% by mass or

more, still more preferably 80% by mass or more, most preferably 100% by mass. Thus, as the combined amount of NR and the modified conjugated diene polymer increases, low-temperature properties become better, so that sufficient performance on ice and snow can be achieved.

Also, the lower limit of the amount of the modified conjugated diene polymer is preferably 20% by mass or more, more preferably 30% by mass or more, still more preferably 40% by mass or more, particularly preferably 55% by mass or more, while the upper limit thereof is preferably 80% by mass or less, more preferably 70% by mass or less, still more preferably 65% by mass or less.

For better effect of the present invention, the amount of NR based on 100% by mass of the rubber component is preferably 20% by mass or more, more preferably 30% by mass or more, still more preferably 35% by mass or more, but preferably 85% by mass or less, more preferably 75% by mass or less, still more preferably 70% by mass or less, particularly preferably 60% by mass or less.

Examples of the NR include commonly used ones such as TSR20 and RSS#3.

The modified conjugated diene polymer is obtained by a production method including: a modification step (A) of performing a modification reaction to introduce an alkoxysilane compound having at least two reactive groups including an alkoxysilyl group, into an active chain end of a terminally active conjugated diene polymer with a cis-1,4-bond content of 94.0% by mass or higher; and a condensation step (B) of performing a condensation reaction on a residue of the alkoxysilane compound introduced into the active chain end, in the presence of a condensation catalyst containing at least one element selected from the group consisting of elements of group 4, group 12, group 13, group 14, and group 15 of the periodic table, wherein the conjugated diene polymer is polymerized in the presence of a catalyst composition mainly containing a mixture of the following components (a) to (c): (a) a lanthanoid-containing compound that contains at least one element selected from the group consisting of lanthanoids, or a reaction product obtained by a reaction between the lanthanoid-containing compound and a Lewis base; (b) at least one compound selected from the group consisting of aluminoxanes and organoaluminum compounds represented by formula (1): $AlR^1R^2R^3$ wherein $R^1$ and $R^2$ are the same as or different from each other and each represent a $C_1$-$C_{10}$ hydrocarbon group or a hydrogen atom, and $R^3$ is the same as or different from $R^1$ and $R^2$ and represents a $C_1$-$C_{10}$ hydrocarbon group; and (c) an iodine-containing compound that contains at least one iodine atom in its molecular structure.

That is, the modified conjugated diene polymer used in the present invention can be produced by performing a modification reaction to introduce an alkoxysilane compound into an active chain end of a conjugated diene polymer with a cis-1,4-bond content of 94.0% by mass or higher, and then performing a condensation reaction on a residue of the alkoxysilane compound introduced into the active chain end, in the presence of a condensation catalyst containing at least one element selected from elements of group 4, group 12, group 13, group 14, and group 15 of the periodic table.

The modified conjugated diene polymer produced by such a production method has excellent fuel efficiency, excellent abrasion resistance, and excellent tensile properties. Thus, the rubber compositions in the present invention containing such a modified conjugated diene polymer, natural rubber, and silica not only have very good processability but also exhibit a reduced increase in hardness at low temperatures. A studless winter tire including a tread (a cap tread in the case of a multi-layered tread) formed from the rubber composition has a good balance of excellent performance on ice and snow and excellent abrasion resistance. Further, a studless winter tire in which the rubber composition in the present invention is applied to the inner layer other than the cap tread, i.e. base tread, has a good balance of excellent performance on ice and snow and excellent durability.

The modification step (A) includes performing a modification reaction to introduce an alkoxysilane compound having at least two reactive groups including an alkoxysilyl group, into an active chain end of a terminally active conjugated diene polymer with a cis-1,4-bond content of 94.0% by mass or higher.

The conjugated diene polymer has a cis-1,4-bond content of 94.0% by mass or higher and has an active chain end. The cis-1,4-bond content is preferably 94.6% by mass or higher, more preferably 98.5% by mass or higher, still more preferably 99.0% by mass or higher, further preferably 99.2% by mass or higher. If the cis-1,4-bond content is lower than 94.0% by mass, the studless winter tire formed from the rubber composition containing the resulting modified conjugated diene polymer may not have sufficient performance on ice and snow, sufficient abrasion resistance, and sufficient tensile properties. The cis-1,4-bond content values herein are calculated from the signal intensities measured by NMR analysis.

The conjugated diene polymer may, for example, be a polymer having repeating units derived from at least one monomer selected from the group consisting of 1,3-butadiene, isoprene, 2,3-dimethyl-1,3-butadiene, 1,3-pentadiene, 1,3-hexadiene, and myrcene. In particular, it may suitably be a polymer having repeating units derived from at least one monomer selected from the group consisting of 1,3-butadiene, isoprene, and 2,3-dimethyl-1,3-butadiene. That is, in a suitable embodiment of the present invention, the modified conjugated diene polymer is formed from at least one conjugated diene compound selected from the group consisting of 1,3-butadiene, isoprene, and 2,3-dimethyl-1,3-butadiene.

In the production of such a conjugated diene polymer, the polymerization may be carried out in the presence or absence of a solvent. The solvent (polymerization solvent) used in the polymerization may be an inert organic solvent. Specific examples include $C_4$-$C_{10}$ saturated aliphatic hydrocarbons such as butane, pentane, hexane, and heptane;

$C_6$-$C_{20}$ saturated alicyclic hydrocarbons such as cyclopentane and cyclohexane; monoolefins such as 1-butene and 2-butene; aromatic hydrocarbons such as benzene, toluene, and xylene; and halogenated hydrocarbons such as methylene chloride, chloroform, carbon tetrachloride, trichloroethylene, perchloroethylene, 1,2-dichloroethane, chlorobenzene, bromobenzene, and chlorotoluene.

The polymerization reaction temperature in producing the conjugated diene polymer is preferably -30°C to 200°C, more preferably 0°C to 150°C. The polymerization reaction mode is not particularly limited, and the reaction may be carried out in a batch reactor or may be carried out continuously with a continuous multistage reactor or the like device. In the case of using a polymerization solvent, the monomer concentration in the solvent is preferably 5 to 50% by mass, more preferably 7 to 35% by mass. From the standpoint of efficiency in the production of the conjugated diene polymer and in view of avoiding deactivation of the terminally active conjugated diene polymer, it is preferred to prevent as much as possible the contamination of the polymerization system by compounds having a deactivation effect, such as oxygen, water, and carbon dioxide gas.

Moreover, the conjugated diene polymer used in the production of the modified conjugated diene polymer in the present invention is polymerized in the presence of a catalyst composition (hereinafter, also referred to as "catalyst") which mainly contains a mixture of the following components (a) to (c):

(a) a lanthanoid-containing compound that contains at least one element selected from the group consisting of lanthanoids, or a reaction product obtained by a reaction between the lanthanoid-containing compound and a Lewis base;

(b) at least one compound selected from the group consisting of aluminoxanes and organoaluminum compounds represented by formula (1): $AlR^1R^2R^3$ wherein $R^1$ and $R^2$ are the same as or different from each other and each represent a $C_1$-$C_{10}$ hydrocarbon group or a hydrogen atom, and $R^3$ is the same as or different from $R^1$ and $R^2$ and represents a $C_1$-$C_{10}$ hydrocarbon group; and

(c) an iodine-containing compound that contains at least one iodine atom in its molecular structure.

The use of such a catalyst allows the resulting conjugated diene polymer to have a cis-1,4-bond content of 94.0% by mass or higher. This catalyst is also useful in industrial production because it does not require that the polymerization reaction be carried out at very low temperatures, and its operation is simple.

The component (a) is a lanthanoid-containing compound that contains at least one element selected from the group consisting of lanthanoids, or a reaction product obtained by a reaction between the lanthanoid-containing compound and a Lewis base. Preferred among lanthanoids are neodymium, praseodymium, cerium, lanthanum, gadolinium, and samarium. In the production method in the present invention, neodymium is particularly preferred among these. These lanthanoids may be used alone or in combination of two or more. Specific examples of the lanthanoid-containing compound include carboxylates, alkoxides, β-diketone complexes, phosphates, and phosphites of lanthanoids. Preferred among these are carboxylates and phosphates, with carboxylates being more preferred.

Specific examples of the carboxylates of lanthanoids include carboxylic acid salts represented by formula (2): $(R^4\text{-}COO)_3M$ wherein M represents a lanthanoid, and $R^4$s are the same as or different from one another and each represent a $C_1$-$C_{20}$ hydrocarbon group. In the formula (2), $R^4$ is preferably a saturated or unsaturated alkyl group, and is preferably a linear, branched, or cyclic alkyl group. Moreover, the carboxyl group is bonded to a primary, secondary, or tertiary carbon atom. Specific examples include salts of octanoic acid, 2-ethylhexanoic acid, oleic acid, stearic acid, benzoic acid, naphthenic acid, the acid available under the trade name "versatic acid" (Shell Chemicals Japan Ltd., a carboxylic acid in which the carboxyl group is bonded to a tertiary carbon atom) and the like. Preferred among these are salts of versatic acid, 2-ethylhexanoic acid, and naphthenic acid.

Specific examples of the alkoxides of lanthanoids include those represented by formula (3): $(R^5O)_3M$ wherein M represents a lanthanoid. Specific examples of the alkoxy group represented by "$R^5O$" in the formula (3) include 2-ethyl-hexylalkoxy, oleylalkoxy, stearylalkoxy, phenoxy, and benzylalkoxy groups. Preferred among these are 2-ethylhexylalkoxy groups and benzylalkoxy groups.

Specific examples of the β-diketone complexes of lanthanoids include acetylacetone complexes, benzoylacetone complexes, propionitrile acetone complexes, valerylacetone complexes, and ethyl acetylacetone complexes. Preferred among these are acetylacetone complexes and ethyl acetylacetone complexes.

Specific examples of the phosphates or phosphites of lanthanoids include salts of bis(2-ethylhexyl)phosphate, bis(1-methylheptyl)phosphate, bis(p-nonylphenyl)phosphate, bis(polyethylene glycol-p-nonylphenyl)phosphate, (1-methylheptyl)(2-ethylhexyl)phosphate, (2-ethylhexyl)(p-nonylphenyl)phosphate, mono-2-ethylhexyl 2-ethylhexyl phosphonate, mono-p-nonylphenyl 2-ethylhexyl phosphonate, bis(2-ethylhexyl)phosphinic acid, bis(1-methylheptyl)phosphinic acid, bis(p-nonylphenyl)phosphinic acid, (1-methylheptyl) (2-ethylhexyl)phosphinic acid, (2-ethylhexyl)(p-nonylphenyl)phosphinic acid and the like. Preferred among these are salts of bis(2-ethylhexyl)phosphate, bis(1-methylheptyl)phosphate, mono-2-ethylhexyl 2-ethylhexyl phosphonate, and bis(2-ethylhexyl)phosphinic acid.

Among these, the lanthanoid-containing compound is particularly preferably a phosphate or carboxylate of

neodymium, most preferably neodymium versatate or neodymium 2-ethylhexanoate.

In order to make the lanthanoid-containing compound soluble in solvent, or to stably store the compound for a long time, it is preferred to mix the lanthanoid-containing compound and a Lewis base or to react the lanthanoid-containing compound and a Lewis base to give a reaction product. The amount of the Lewis base per mole of lanthanoid is preferably 0 to 30 mol, more preferably 1 to 10 mol. Specific examples of the Lewis base include acetylacetone, tetrahydrofuran, pyridine, N,N-dimethylformamide, thiophene, diphenyl ether, triethylamine, organophosphorus compounds, and monovalent or divalent alcohols. The examples of the component (a) described above may be used alone or in combination of two or more.

The component (b) is at least one compound selected from the group consisting of aluminoxanes and organoaluminum compounds represented by formula (1): $AlR^1R^2R^3$ wherein $R^1$ and $R^2$ are the same as or different from each other and each represent a $C_1$-$C_{10}$ hydrocarbon group or a hydrogen atom, and $R^3$ is the same as or different from $R^1$ and $R^2$ and represents a $C_1$-$C_{10}$ hydrocarbon group.

The aluminoxane (hereinafter, also referred to as "alumoxane") refers to a compound whose structure is represented by the formula (4) or (5) below. The aluminoxane may be any of the alumoxane association products disclosed in Fine Chemicals, 23, (9), 5 (1994), J. Am. Chem. Soc., 115, 4971 (1993), and J. Am. Chem. Soc., 117, 6465 (1995).

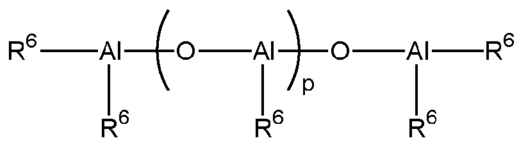

(4)

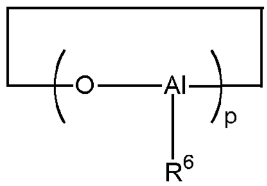

(5)

In the formulas (4) and (5), $R^6$s are the same as or different from one another and each represent a $C_1$-$C_{20}$ hydrocarbon group, and p is an integer of 2 or greater.

Specific examples of $R^6$ include methyl, ethyl, propyl, butyl, isobutyl, t-butyl, hexyl, isohexyl, octyl, and isooctyl groups. Preferred among these are methyl, ethyl, isobutyl, and t-butyl groups, with a methyl group being particularly preferred.

Also, the p is preferably an integer of 4 to 100.

Specific examples of the alumoxane include methylalumoxane (hereinafter, also referred to as "MAO"), ethylalumoxane, n-propylalumoxane, n-butylalumoxane, isobutylalumoxane, t-butylalumoxane, hexylalumoxane, and isohexylalumoxane. MAO is preferred among these. The alumoxane may be prepared by known methods, such as, for example, by adding a trialkylaluminum or a dialkylaluminum monochloride into an organic solvent, such as benzene, toluene or xylene, and further adding water, water vapor, water vapor-containing nitrogen gas, or a salt containing water of crystallization, such as copper sulfate pentahydrate or aluminum sulfate hexadecahydrate, to react them. The above alumoxanes may be used alone or in combination of two or more.

Specific examples of the organoaluminum compound represented by the formula (1) include trimethylaluminum, triethylaluminum, tri-n-propylaluminum, triisopropylaluminum, tri-n-butylaluminum, triisobutylaluminum, tri-t-butylaluminum, tripentylaluminium, trihexylaluminium, tricyclohexylaluminum, trioctylaluminum, diethylaluminum hydride, di-n-propylaluminum hydride, di-n-butylaluminum hydride, diisobutylaluminum hydride, dihexylaluminum hydride, diisohexylaluminum hydride, dioctylaluminum hydride, diisooctylaluminum hydride, ethylaluminum dihydride, n-propylaluminum dihydride, and isobutylaluminum dihydride. Preferred among these are diisobutylaluminum hydride, triethylaluminum, triisobutylaluminum, and diethylaluminum hydride, with diisobutylaluminum hydride being particularly preferred. The above organoaluminum compounds may be used alone or in combination of two or more.

The component (c) is an iodine-containing compound that contains at least one iodine atom in its molecular structure. By using such an iodine-containing compound, a conjugated diene polymer having a cis-1,4-bond content of 94.0% by mass or higher can be readily produced. The iodine-containing compound is not particularly limited, as long as it has at least one iodine atom in its molecular structure. Examples include iodine, trimethylsilyl iodide, diethylaluminum iodide, methyl iodide, butyl iodide, hexyl iodide, octyl iodide, iodoform, diiodomethane, benzylidene iodide, beryllium iodide, magnesium iodide, calcium iodide, barium iodide, zinc iodide, cadmium iodide, mercury iodide, manganese iodide, rhenium iodide, copper iodide, silver iodide, and gold iodide.

In particular, the iodide-containing compound is preferably an iodinated silicon compound represented by for-

mula (6): $R^7_qSiI_{4-q}$ wherein $R^7$s are the same as or different from one another and each represent a $C_1$-$C_{20}$ hydrocarbon group or a hydrogen atom, and q is an integer of 0 to 3; an iodinated hydrocarbon compound represented by formula (7) : $R^8_rI_{4-r}$ wherein $R^8$s are the same as or different from one another and each represent a $C_1$-$C_{20}$ hydrocarbon group, and r is an integer of 1 to 3; or iodine. Such iodinated silicon compounds, iodinated hydrocarbon compounds, and iodine are soluble well in organic solvents and readily operable, and thus are useful in industrial production. That is, in another suitable embodiment of the present invention, the component (c) is at least one iodine-containing compound selected from the group consisting of iodinated silicon compounds, iodinated hydrocarbon compounds, and iodine.

Specific examples of the iodinated silicon compound represented by the above formula (6) include trimethylsilyl iodide, triethylsilyl iodide, and dimethylsilyl diiodo. Preferred among these is trimethylsilyl iodide.

Specific examples of the iodinated hydrocarbon compound represented by the above formula (7) include methyl iodide, butyl iodide, hexyl iodide, octyl iodide, iodoform, diiodomethane, and benzylidene iodide. Preferred among these are methyl iodide, iodoform, and diiodomethane.

The iodine-containing compound is particularly preferably iodine, trimethylsilyl iodide, triethylsilyl iodide, dimethylsilyl diiodo, methyl iodide, iodoform, or diiodomethane, most preferably trimethylsilyl iodide. The above iodine-containing compounds may be used alone or in combination of two or more.

The mixture ratio of the components (a) to (c) may be appropriately set as needed. The amount of the component (a) mixed is, for example, preferably 0.00001 to 1.0 mmol, more preferably 0.0001 to 0.5 mmol for each 100 g of the conjugated diene compound. If the amount of the component (a) is less than 0.00001 mmol, polymerization activity may be reduced. If more than 1.0 mmol of the component (a) is used, catalyst concentration may be increased, which may require a decalcification step.

If the component (b) is an alumoxane, the amount of the alumoxane mixed may be defined as a mole ratio between the component (a) and the aluminum (Al) contained in the alumoxane. The mole ratio of "component (a)":"aluminum (Al) contained in alumoxane" is preferably 1:1 to 1:500, more preferably 1:3 to 1:250, still more preferably 1:5 to 1:200. If the amount of the alumoxane mixed is out of the range mentioned above, then catalytic activity may be reduced or a step of removing catalyst residues may be required.

If the component (b) is an organoaluminum compound, the amount of the organoaluminum compound mixed may be defined as a mole ratio between the component (a) and the organoaluminum compound. The mole ratio of "component (a)":"organoaluminum compound" is preferably 1:1 to 1:700, more preferably 1:3 to 1:500. If the amount of the organoaluminum compound mixed is out of the range mentioned above, then catalytic activity may be reduced or a step of removing catalyst residues may be required.

The amount of the component (c) mixed may be defined as a mole ratio between the iodine atom contained in the component (c) and the component (a). The mole ratio [(iodine atom contained in component (c))/component (a)] is preferably 0.5 to 3.0, more preferably 1.0 to 2.5, still more preferably 1.2 to 2.0. If the mole ratio [(iodine atom contained in component (c))/component (a)] is less than 0.5, polymerization catalytic activity may be reduced. If the mole ratio [(iodine atom contained in component (c))/component (a)] is more than 3.0, the component (c) may act as a catalyst poison.

The catalyst mentioned above optionally preferably contains, in addition to the components (a) to (c), 1000 mol or less, more preferably 3 to 1000 mol, still more preferably 5 to 300 mol of at least one compound selected from the group consisting of conjugated diene compounds and nonconjugated diene compounds per mole of the component (a). It is preferred that the catalyst contain at least one compound selected from the group consisting of conjugated diene compounds and nonconjugated diene compounds because catalytic activity is further enhanced. Examples of conjugated diene compounds that can be used in this case include 1,3-butadiene and isoprene as mentioned later for the monomers for polymerization. Examples of nonconjugated diene compounds include divinylbenzene, diisopropenylbenzene, triisopropenylbenzene, 1,4-vinylhexadiene, and ethylidene norbornene.

The catalyst composition mainly containing a mixture of the components (a) to (c) may be prepared, for example, by reacting the components (a) to (c) dissolved in a solvent and optionally at least one compound selected from the group consisting of conjugated diene compounds and nonconjugated diene compounds. In the preparation, the components may be added in any order, provided that the components are preferably previously mixed/reacted and aged, in view of increasing polymerization activity and shortening the induction period for polymerization initiation. The aging temperature is preferably 0°C to 100°C, more preferably 20°C to 80°C. If the aging temperature is lower than 0°C, aging tends to be insufficiently effected. Conversely, if the aging temperature is higher than 100°C, catalytic activity tends to decrease, and molecular weight distribution tends to be easily extended. The aging time is not particularly limited. Moreover, the components may be brought into contact with one another in a line before they are added to the polymerization reactor. The aging time in this case is sufficient if it is 0.5 minutes or longer. The prepared catalyst is stable for several days.

The conjugated diene polymer used in the production of the modified conjugated diene polymer in the present invention preferably has a ratio of weight average molecular weight (Mw) to number average molecular weight (Mn) determined by gel permeation chromatography, i.e., a molecular weight distribution (Mw/Mn), of 3.5 or less, more preferably 3.0 or less, still more preferably 2.5 or less. If the molecular weight distribution is more than 3.5, rubber properties

including tensile properties and low heat build-up properties tend to be reduced. Conversely, the lower limit of the molecular weight distribution is not particularly limited. The molecular weight distribution (Mw/Mn) herein refers to that calculated as a ratio of weight average molecular weight to number average molecular weight [(weight average molecular weight)/(number average molecular weight)]. Here, the weight average molecular weight of the conjugated diene polymer is determined by gel permeation chromatography (GPC) versus polystyrene standards. The number average molecular weight of the conjugated diene polymer is also determined by GPC versus polystyrene standards.

The vinyl content and the cis-1,4-bond content of the conjugated diene polymer can be readily adjusted by controlling the polymerization temperature. Also, the Mw/Mn value can be readily adjusted by controlling the mole ratio of the components (a) to (c).

The Mooney viscosity at 100°C ($ML_{1+4}$, 100°C) of the conjugated diene polymer is preferably in the range of from 5 to 50, more preferably from 10 to 40. If the Mooney viscosity is less than 5, vulcanizate mechanical properties, abrasion resistance and the like may be reduced. Conversely, if the Mooney viscosity is more than 50, the modified conjugated diene polymer obtained after the modification reaction may have reduced processability during kneading. The Mooney viscosity can be readily adjusted by controlling the mole ratio of the components (a) to (c).

The Mooney viscosity ($ML_{1+4}$, 100°C) can be determined by the measurement method described later in Examples.

Moreover, the amount of 1,2-vinyl bonds (1,2-vinyl bond content) in the conjugated diene polymer is preferably 0.5% by mass or less, more preferably 0.4% by mass or less, still more preferably 0.3% by mass or less. If the amount is more than 0.5% by mass, rubber properties such as tensile properties tend to be reduced. Also, the 1,2-vinyl bond content in the conjugated diene polymer is preferably 0.001% by mass or more, more preferably 0.01% by mass or more. The 1,2-vinyl bond content values herein are calculated from the signal intensities measured by NMR analysis.

The alkoxysilane compound (hereinafter, also referred to as "modifier") used in the modification step (A) contains at least two reactive groups including an alkoxysilyl group. The type of reactive group other than alkoxysilyl groups is not particularly limited. For example, it is preferably at least one functional group selected from the group consisting of (f) an epoxy group, (g) an isocyanato group, (h) a carbonyl group, and (i) a cyano group. That is, in another suitable embodiment of the present invention, the alkoxysilane compound contains at least one functional group selected from the group consisting of (f) an epoxy group, (g) an isocyanato group, (h) a carbonyl group, and (i) a cyano group. The alkoxysilane compound may be used in the form of a partial condensate or a mixture of the alkoxysilane compound and the partial condensate.

Here, the "partial condensate" refers to a product in which some (i.e., not the whole) of SiOR groups (where OR represents an alkoxy group) in the alkoxysilane compound are linked by SiOSi linkages through condensation. At least 10% of the polymer chains of the conjugated diene polymer used in the modification reaction preferably have living properties.

Specific, suitable examples of the alkoxysilane compound containing (f) an epoxy group (hereinafter, also referred to as "epoxy group-containing alkoxysilane compound") include 2-glycidoxyethyltrimethoxysilane, 2-glycidoxyethyltriethoxysilane, (2-glycidoxyethyl)methyldimethoxysilane, 3-glycidoxypropyltrimethoxysilane, 3-glycidoxypropyltriethoxysilane, (3-glycidoxypropyl)methyldimethoxysilane, 2-(3,4-epoxycyclohexyl)ethyltrimethoxysilane, 2-(3,4-epoxycyclohexyl)ethyltriethoxysilane, and 2-(3,4-epoxycyclohexyl)ethyl(methyl)dimethoxysilane. More preferred among these are 3-glycidoxypropyltrimethoxysilane and 2-(3,4-epoxycyclohexyl)ethyltrimethoxysilane.

Moreover, examples of the alkoxysilane compound containing (g) an isocyanato group (hereinafter, also referred to as "isocyanato group-containing alkoxysilane compound") include 3-isocyanatopropyltrimethoxysilane, 3-isocyanatopropyltriethoxysilane, 3-isocyanatopropylmethyldiethoxysilane, and 3-isocyanatopropyltriisopropoxysilane. Particularly preferred among these is 3-isocyanatopropyltrimethoxysilane.

Moreover, examples of the alkoxysilane compound containing (h) a carbonyl group (hereinafter, also referred to as "carbonyl group-containing alkoxysilane compound") include 3-methacryloyloxypropyltriethoxysilane, 3-methacryloyloxypropyltrimethoxysilane, 3-methacryloyloxypropylmethyldiethoxysilane, and 3-methacryloyloxypropyltriisopropoxysilane. Particularly preferred among these is 3-methacryloyloxypropyltrimethoxysilane.

Furthermore, examples of the alkoxysilane compound containing (i) a cyano group (hereinafter, also referred to as "cyano group-containing alkoxysilane compound") include 3-cyanopropyltriethoxysilane, 3-cyanopropyltrimethoxysilane, 3-cyanopropylmethyldiethoxysilane, and 3-cyanopropyltriisopropoxysilane. Particularly preferred among these is 3-cyanopropyltrimethoxysilane.

Particularly preferred among these compounds mentioned as the modifier are 3-glycidoxypropyltrimethoxysilane, 2-(3,4-epoxycyclohexyl)ethyltrimethoxysilane, 3-isocyanatopropyltrimethoxysilane, 3-methacryloyloxypropyltrimethoxysilane, and 3-cyanopropyltrimethoxysilane, with 3-glycidoxypropyltrimethoxysilane being most preferred.

These modifiers may be used alone or in combination of two or more. Also, partial condensates of the alkoxysilane compounds mentioned above may be used.

In the modification reaction in the modification step (A), the amount of the alkoxysilane compound is preferably 0.01 to 200 mol, more preferably 0.1 to 150 mol per mole of the component (a). If the amount is less than 0.01 mol, the

modification reaction may not sufficiently proceed and thus the dispersibility of filler cannot be sufficiently improved, possibly resulting in insufficient vulcanizate mechanical properties, insufficient abrasion resistance, and insufficient low heat build-up properties. Conversely, if more than 200 mol of the alkoxysilane compound is used, as the modification reaction may already be saturated, the cost in this case is unnecessarily increased according to the amount used. The modifier may be added by any method, and, for example, may be added at a time, in portions, or continuously. In particular, the modifier is preferably added at a time.

The modification reaction is preferably performed in a solution. The solution containing unreacted monomers used in the polymerization may be directly used as this solution. Moreover, the modification reaction mode is not particularly limited, and the reaction may be carried out in a batch reactor or may be carried out continuously with a continuous multistage reactor, an inline mixer or the like device. Furthermore, the modification reaction is preferably performed after the polymerization reaction and before the solvent removal treatment, water treatment, heat treatment, and the operations required for polymer isolation.

The modification reaction temperature may be as mentioned for the polymerization temperature in polymerizing the conjugated diene polymer. Specifically, the temperature is preferably 20°C to 100°C, more preferably 30°C to 90°C. If the temperature is lower than 20°C, the polymer tends to have an increased viscosity, while if the temperature is higher than 100°C, the polymerization-active chain end may be deactivated.

Moreover, the reaction time for the modification reaction is preferably 5 minutes to 5 hours, more preferably 15 minutes to 1 hour. After the alkoxysilane compound residue is introduced into the active chain end of the polymer, a known antioxidant or a reaction terminator may optionally be added in the condensation step (B).

In the modification step (A), it is preferred to add, in addition to the modifier, an additive that undergoes a condensation reaction with the alkoxysilane compound (modifier) residue introduced into the active chain end, and is thus consumed in the modification step (B). Specifically, it is preferred to add a functional group-introducing agent. This functional group-introducing agent enables the modified conjugated diene polymer to have improved abrasion resistance.

The functional group-introducing agent is not particularly limited, provided that it undergoes substantially no reaction directly with the active chain end but remains as an unreacted product in the reaction system. For example, the functional group-introducing agent is preferably an alkoxysilane compound different from the alkoxysilane compound used as the modifier, i.e., an alkoxysilane compound containing at least one functional group selected from the group consisting of (j) an amino group, (k) an imino group, and (1) a mercapto group. The alkoxysilane compound used as the functional group-introducing agent may be used in the form of a partial condensate or a mixture of the partial condensate and the alkoxysilane compound used as the functional group-introducing agent, which is not a partial condensate.

Specific examples of the functional group-introducing agent which is an alkoxysilane compound containing (j) an amino group (hereinafter, also referred to as "amino group-containing alkoxysilane compound") include 3-dimethylaminopropyl(triethoxy)silane, 3-dimethylaminopropyl(trimethoxy)silane, 3-diethylaminopropyl(triethoxy)silane, 3-diethylaminopropyl(trimethoxy)silane, 2-dimethylaminoethyl(triethoxy)silane, 2-dimethylaminoethyl(trimethoxy)silane, 3-dimethylaminopropyl(diethoxy)methylsilane, 3-dibutylaminopropyl(triethoxy)silane, 3-aminopropyltrimethoxysilane, 3-aminopropyltriethoxysilane, aminophenyltrimethoxysilane, aminophenyltriethoxysilane, 3-(N-methylamino)propyltrimethoxysilane, 3-(N-methylamino)propyltriethoxysilane, 3-(1-pyrrolidinyl)propyl(triethoxy)silane, and 3-(1-pyrrolidinyl)propyl(trimethoxy)silane, as well as N-(1,3-dimethylbutylidene)-3-(triethoxysilyl)-1-propanamine, N-(1-methylethylidene)-3-(triethoxysilyl)-1-propanamine, N-ethylidene-3-(triethoxysilyl)-1-propanamine, N-(1-methylpropylidene)-3-(triethoxysilyl)-1-propanamine, N-(4-N,N-dimethylaminobenzylidene)-3-(triethoxysilyl)-1-propanamine, and N-(cyclohexylidene)-3-(triethoxysilyl)-1-propanamine, and trimethoxysilyl compounds, methyldiethoxysilyl compounds, ethyldiethoxysilyl compounds, methyldimethoxysilyl compounds, and ethyldimethoxysilyl compounds corresponding to the foregoing triethoxysilyl compounds. Particularly preferred among these are 3-diethylaminopropyl(triethoxy)silane, 3-dimethylaminopropyl(triethoxy)silane, 3-aminopropyltriethoxysilane, N-(1-methylpropylidene)-3-(triethoxysilyl)-1-propanamine, and N-(1,3-dimethylbutylidene)-3-(triethoxysilyl)-1-propanamine.

Also, suitable examples of the alkoxysilane compound containing (k) an imino group (hereinafter, also referred to as "imino group-containing alkoxysilane compound") include 3-(1-hexamethyleneimino)propyl(triethoxy)silane, 3-(1-hexamethyleneimino)propyl(trimethoxy)silane, (1-hexamethyleneimino)methyl(trimethoxy)silane, (1-hexamethyleneimino)methyl(triethoxy)silane, 2-(1-hexamethyleneimino)ethyl(triethoxy)silane, 2-(1-hexamethyleneimino)ethyl(trimethoxy)silane, 3-(1-heptamethyleneimino)propyl(triethoxy)silane, 3-(1-dodecamethyleneimino)propyl(triethoxy)silane, 3-(1-hexamethyleneimino)propyl(diethoxy)methylsilane, and 3-(1-hexamethyleneimino)propyl(diethoxy)ethylsilane, as well as 1-[3-(triethoxysilyl)propyl]-4,5-dihydroimidazole, 1-[3-(trimethoxysilyl)propyl]-4,5-dihydroimidazole, 3-[10-(triethoxysilyl)decyl]-4-oxazoline, N-(3-isopropoxysilylpropyl)-4,5-dihydroimidazole, and N-(3-methyldiethoxysilylpropyl)-4,5-dihydroimidazole. More preferred among these are 3-(1-hexamethyleneimino)propyl(triethoxy)silane, 3-(1-hexamethyleneimino)propyl(triethoxy)silane, (1-hexamethyleneimino)methyl(trimethoxy)silane, 1-[3-(triethoxysilyl)propyl]-4,5-dihydroimidazole, 1-[3-(trimethoxysilyl)propyl]-4,5-dihydroimidazole, and N-(3-triethoxysilylpropyl)-4,5-dihydroimidazole.

Also, examples of the alkoxysilane compound containing (1) a mercapto group (hereinafter, also referred to as

"mercapto group-containing alkoxysilane compound") include 3-mercaptopropyltriethoxysilane, 3-mercaptopropyltrimethoxysilane, 2-mercaptoethyltriethoxysilane, 2-mercaptoethyltrimethoxysilane, 3-mercaptopropyl(diethoxy)methylsilane, 3-mercaptopropyl(monoethoxy)dimethylsilane, mercaptophenyltrimethoxysilane, and mercaptophenyltriethoxysilane. Particularly preferred among these is 3-mercaptopropyltriethoxysilane.

Particularly preferred among these compounds mentioned as the functional group-introducing agent are 3-diethylaminopropyl(triethoxy)silane, 3-dimethylaminopropyl(triethoxy)silane, 3-aminopropyltriethoxysilane, 3-(1-hexamethyleneimino)propyl(triethoxy)silane, N-(1-methylpropylidene)-3-(triethoxysilyl)-1-propanamine, N-(1,3-dimethylbutylidene)-3-(triethoxysilyl)-1-propanamine, 3-(1-hexamethyleneimino)propyl(triethoxy)silane, (1-hexamethyleneimino)methyl(trimethoxy)silane, 1-[3-(triethoxysilyl)propyl]-4,5-dihydroimidazole, 1-[3-(trimethoxysilyl)propyl]-4,5-dihydroimidazole, N-(3-triethoxysilylpropyl)-4,5-dihydroimidazole, and 3-mercaptopropyltriethoxysilane, with 3-aminopropyltriethoxysilane being most preferred.

These functional group-introducing agents may be used alone or in combination of two or more.

In the case of using an alkoxysilane compound as the functional group-introducing agent, the amount thereof is preferably 0.01 to 200 mol, more preferably 0.1 to 150 mol per mole of the component (a). If the amount is less than 0.01 mol, the condensation reaction may not sufficiently proceed and thus the dispersibility of filler cannot be sufficiently improved, possibly resulting in poor vulcanizate mechanical properties, poor abrasion resistance, and poor low heat build-up properties. Conversely, if more than 200 mol of the alkoxysilane compound is used, as the condensation reaction may already be saturated, the cost in this case is unnecessarily increased according to the amount used.

The functional group-introducing agent is preferably added after the introduction of the alkoxysilane compound residue into the active chain end of the conjugated diene polymer in the modification step (A) and before the start of the condensation reaction in the condensation step (B). If the functional group-introducing agent is added after the start of the condensation reaction, the functional group-introducing agent may not be uniformly dispersed, resulting in reduced catalytic performance. Specifically, the functional group-introducing agent is preferably added 5 minutes to 5 hours after the start of the modification reaction, and is more preferably added 15 minutes to 1 hour after the start of the modification reaction.

In the case where the functional group-introducing agent is any of the alkoxysilane compounds containing the functional groups mentioned above, since the terminally active conjugated diene polymer is subjected to a modification reaction with a substantially stoichiometric amount of the modifier added to the reaction system, to introduce an alkoxysilyl group into substantially every active chain end, and the functional group-introducing agent is further added, an excess of alkoxysilane compound residues over the amount equivalent to the number of active chain ends of the conjugated diene polymer will be introduced.

It is preferred from the standpoint of reaction efficiency that the condensation reaction of alkoxysilyl groups occur between the free alkoxysilane compound and the alkoxysilyl group at the chain end of the conjugated diene polymer, and optionally occur between the alkoxysilyl groups at the chain ends of the conjugated diene polymer. The reaction between the free alkoxysilane compounds is not preferred. Thus, if an alkoxysilane compound is additionally added as the functional group-introducing agent, the hydrolyzability of its alkoxysilyl group is preferably lower than the hydrolyzability of the alkoxysilyl group introduced into the chain end of the conjugated diene polymer.

For example, preferred is a combination of a compound containing a highly hydrolyzable trimethoxysilyl group as the alkoxysilane compound used for the reaction with the active chain end of the conjugated diene polymer, with a compound containing an alkoxysilyl group (e.g. a triethoxysilyl group) having a lower hydrolyzability than the trimethoxysilyl group-containing compound as the alkoxysilane compound additionally added as the functional group-introducing agent. In contrast, reaction efficiency may be reduced, for example, if the alkoxysilane compound used for the reaction with the active chain end of the conjugated diene polymer is a compound containing a triethoxysilyl group, and the alkoxysilane compound additionally added as the functional group-introducing agent is a compound containing a trimethoxysilyl group.

The condensation step (B) includes performing a condensation reaction on a residue of the alkoxysilane compound introduced into the active chain end, in the presence of a condensation catalyst containing at least one element selected from the group consisting of elements of group 4, group 12, group 13, group 14, and group 15 of the periodic table.

The condensation catalyst is not particularly limited as long as it contains at least one element selected from the group consisting of elements of group 4, group 12, group 13, group 14, and group 15 of the periodic table. For example, the condensation catalyst preferably contains at least one element selected from the group consisting of titanium (Ti) (group 4), tin (Sn) (group 14), zirconium (Zr) (group 4), bismuth (Bi) (group 15), and aluminum (Al) (group 13).

Specific examples of the condensation catalyst containing tin (Sn) include bis(n-octanoate)tin, bis(2-ethylhexanoate)tin, bis(laurate)tin, bis(naphthenate)tin, bis(stearate)tin, bis(oleate)tin, dibutyltin diacetate, dibutyltin n-octanoate, dibutyltin di-2-ethylhexanoate, dibutyltin dilaurate, dibutyltin maleate, dibutyltin bis(benzylmaleate), dibutyltin bis(2-ethylhexylmaleate), di-n-octyltin diacetate, di-n-octyltin di-n-octanoate, din-octyltin di-2-ethylhexanoate, di-n-octyltin dilaurate, di-n-octyltin maleate, di-n-octyltin bis(benzylmaleate), and di-n-octyltin bis(2-ethylhexylmaleate).

Examples of the condensation catalyst containing zirconium (Zr) include tetraethoxyzirconium, tetra-n-propoxyzirconium, tetra-i-propoxyzirconium, tetra-n-butoxyzirconium, tetra-sec-butoxyzirconium, tetra-tert-butoxyzirconium, tetra(2-ethylhexyloxide)zirconium, zirconium tributoxy stearate, zirconium tributoxy acetylacetonate, zirconium dibutoxy bis(acetylacetonate), zirconium tributoxy ethylacetoacetate, zirconium butoxy acetylacetonate bis(ethylacetoacetate), zirconium tetrakis(acetylacetonate), zirconium diacetylacetonate bis(ethylacetoacetate), bis(2-ethylhexanoate)zirconium oxide, bis(laurate)zirconium oxide, bis(naphthate)zirconium oxide, bis(stearate)zirconium oxide, bis(oleate)zirconium oxide, bis(linoleate)zirconium oxide, tetrakis(2-ethylhexanoate)zirconium, tetrakis(laurate)zirconium, tetrakis(naphthate)zirconium, tetrakis(stearate)zirconium, tetrakis(oleate)zirconium, and tetrakis(linoleate)zirconium.

Examples of the condensation catalyst containing bismuth (Bi) include tris(2-ethylhexanoate)bismuth, tris(laurate)bismuth, tris(naphthate)bismuth, tris(stearate)bismuth, tris(oleate)bismuth, and tris(linoleate)bismuth.

Examples of the condensation catalyst containing aluminum (Al) include triethoxyaluminum, tri-n-propoxyaluminum, tri-i-propoxyaluminum, tri-n-butoxyaluminum, tri-sec-butoxyaluminum, tri-tert-butoxyaluminum, tri(2-ethylhexyl oxide)aluminum, aluminum dibutoxy stearate, aluminum dibutoxy acetylacetonate, aluminum butoxy bis(acetylacetonate), aluminum dibutoxy ethylacetoacetate, aluminum tris(acetylacetonate), aluminum tris(ethylacetoacetate), tris(2-ethylhexanoate)aluminum, tris(laurate)aluminum, tris(naphthate)aluminum, tris(stearate)aluminum, tris(oleate)aluminum, and tris(linoleate)aluminum.

Examples of the condensation catalyst containing titanium (Ti) include tetramethoxytitanium, tetraethoxytitanium, tetra-n-propoxytitanium, tetra-i-propoxytitanium, tetra-n-butoxytitanium, tetra-n-butoxytitanium oligomer, tetra-sec-butoxytitanium, tetra-tert-butoxytitanium, tetra(2-ethylhexyl oxide)titanium, bis(octanedioleate)bis(2-ethylhexyl oxide)titanium, tetra(octanedioleate)titanium, titanium lactate, titanium dipropoxy bis(triethanolaminate), titanium dibutoxy bis(triethanolaminate), titanium tributoxy stearate, titanium tripropoxy stearate, titanium tripropoxy acetylacetonate, titanium dipropoxy bis(acetylacetonate), titanium tripropoxy ethylacetoacetate, titanium propoxy acetylacetonate bis(ethylacetoacetate), titanium tributoxy acetylacetonate, titanium dibutoxy bis(acetylacetonate), titanium tributoxy ethylacetoacetate, titanium butoxy acetylacetonate bis(ethylacetoacetate), titanium tetrakis(acetylacetonate), titanium diacetylacetonate bis(ethylacetoacetate), bis(2-ethylhexanoate)titanium oxide, bis(laurate)titanium oxide, bis(naphthate)titanium oxide, bis(stearate)titanium oxide, bis(oleate)titanium oxide, bis(linoleate)titanium oxide, tetrakis(2-ethylhexanoate) titanium, tetrakis(laurate)titanium, tetrakis(naphthate)titanium, tetrakis(stearate)titanium, tetrakis(oleate)titanium, and tetrakis(linoleate)titanium.

More preferred among these condensation catalysts are condensation catalysts containing titanium (Ti). Still more preferred among the condensation catalysts containing titanium (Ti) are alkoxides, carboxylates, and acetylacetonate complex salts of titanium (Ti). Particularly preferred is tetra-i-propoxytitanium (tetraisopropyl titanate). The use of a titanium (Ti)-containing condensation catalyst can more effectively promote the condensation reaction of the residue of the alkoxysilane compound used as the modifier and of the residue of the alkoxysilane compound used as the functional group-introducing agent, to provide a modified conjugated diene polymer having excellent processability, excellent low-temperature properties, and excellent abrasion resistance. Thus, in another suitable embodiment of the present invention, the condensation catalyst contains titanium (Ti).

The amount of the condensation catalyst, in terms of the number of moles of the aforementioned compounds usable as the condensation catalyst, is preferably 0.1 to 10 mol, particularly preferably 0.3 to 5 mol per mole of the total amount of alkoxysilyl groups in the reaction system. If the amount is less than 0.1 mol, the condensation reaction may not sufficiently proceed. Conversely, if more than 10 mol of the condensation catalyst is used, as the effect of the condensation catalyst may already be saturated, the cost in this case is unnecessarily increased according to the amount used.

Although the condensation catalyst may be added before the above modification reaction, it is preferably added after the modification reaction and before the start of the condensation reaction. If the condensation catalyst is added before the modification reaction, the catalyst may directly react with the active chain end and thus inhibit the alkoxysilyl group from being introduced into the active chain end. Also, if the condensation catalyst is added after the start of the condensation reaction, the catalyst may not be uniformly dispersed, resulting in reduced catalytic performance. Specifically, the condensation catalyst is preferably added 5 minutes to 5 hours after the start of the modification reaction, and is more preferably added 15 minutes to 1 hour after the start of the modification reaction.

The condensation reaction in the condensation step (B) is preferably performed in an aqueous solution. The temperature during the condensation reaction is preferably 85°C to 180°C, more preferably 100°C to 170°C, particularly preferably 110°C to 150°C. If the temperature during the condensation reaction is lower than 85°C, the condensation reaction may not sufficiently proceed and therefore may fail to be completed. In this case, the resulting modified conjugated diene polymer may change with time, causing quality problems. Conversely, if the temperature is higher than 180°C, an aging reaction of the polymer may proceed, causing reduction in physical properties.

The aqueous solution used in the condensation reaction preferably has a pH of 9 to 14, more preferably 10 to 12. The use of the aqueous solution with a pH within such a range can promote the condensation reaction to improve temporal stability of the modified conjugated diene polymer. If the pH is lower than 9, the condensation reaction may not sufficiently proceed and therefore may fail to be completed. In this case, the resulting modified conjugated diene

polymer may change with time, causing quality problems. Conversely, if the pH of the aqueous solution used in the condensation reaction is higher than 14, a large amount of alkali-derived components may be left in the isolated modified conjugated diene polymer, and thus it may be difficult to remove them.

The reaction time for the condensation reaction is preferably 5 minutes to 10 hours, more preferably on the order of 15 minutes to 5 hours. A reaction time shorter than 5 minutes may not allow the condensation reaction to be completed. Conversely, if the reaction time is longer than 10 hours, the condensation reaction may already be saturated. Moreover, the pressure in the reaction system during the condensation reaction is preferably 0.01 to 20 MPa, more preferably 0.05 to 10 MPa.

The condensation reaction mode is not particularly limited, and the reaction may be carried out in a batch reactor or may be carried out continuously with a continuous multistage reactor or the like device. Moreover, solvent removal may be performed simultaneously with the condensation reaction.

After the condensation reaction is performed as described above, conventional post treatments can be performed to provide the target modified conjugated diene polymer.

The modified conjugated diene polymer preferably has a Mooney viscosity ($ML_{1+4}$, 125°C) of 10 to 150, more preferably 20 to 100. If the Mooney viscosity ($ML_{1+4}$, 125°C) is less than 10, rubber properties including tensile properties may be reduced. Conversely, the polymer with a Mooney viscosity ($ML_{1+4}$, 125°C) of more than 150 may have poor workability and thus be difficult to knead with compounding agents.

The Mooney viscosity ($ML_{1+4}$, 125°C) can be determined by the measurement method described later in Examples.

Moreover, the molecular weight distribution (Mw/Mn) of the modified conjugated diene polymer is preferably 3.5 or lower, more preferably 3.0 or lower, still more preferably 2.5 or lower. If the molecular weight distribution is more than 3.5, rubber properties such as tensile properties and low heat build-up properties tend to be reduced. The weight average molecular weight (Mw) of the modified conjugated diene polymer herein is determined by gel permeation chromatography (GPC) versus polystyrene standards. The number average molecular weight (Mn) of the modified conjugated diene polymer herein is determined by GPC versus polystyrene standards.

Moreover, the cold flow (mg/min.) of the modified conjugated diene polymer is preferably 1.0 or less, more preferably 0.8 or less. The polymer with a cold flow of higher than 1.0 may have poor morphological stability during storage. The cold flow values (mg/min.) herein are calculated by the later-described measurement method.

Furthermore, the temporal stability rating of the modified conjugated diene polymer is preferably 0 to 5, more preferably 0 to 2. The polymer with a rating higher than 5 may change with time during storage. The temporal stability rating herein is determined by the later-described measurement method.

Moreover, the glass transition temperature of the modified conjugated diene polymer is preferably -40°C or lower, more preferably -43°C or lower, still more preferably -46°C or lower, particularly preferably -50°C or lower. If the glass transition temperature is higher than -40°C, the low-temperature properties required for studless winter tires may not be sufficiently ensured. Conversely, the lower limit of the glass transition temperature is not particularly limited.

The glass transition temperature of the modified conjugated diene polymer can be measured by the measurement method described later in Examples.

The rubber component in the rubber compositions in the present invention may contain rubbers other than the natural rubber and modified conjugated diene polymer. Examples of other rubbers include isoprene-based diene rubbers such as polyisoprene rubber (IR), deproteinized natural rubber (DPNR), high purity natural rubber (UPNR), and modified natural rubbers; diene rubbers such as polybutadiene rubber (BR), styrene butadiene rubber (SBR), styrene isoprene butadiene rubber (SIBR), chloroprene rubber (CR), and acrylonitrile butadiene rubber (NBR); and non-diene rubbers such as ethylene propylene diene rubber (EPDM), butyl rubber (IIR), and halogenated butyl rubber (X-IIR).

Examples of the modified natural rubbers include epoxidized natural rubber (ENR), hydrogenated natural rubber (HNR), and grafted natural rubber.

In the present invention, the amount of silica is 1 part by mass or more for each 100 parts by mass of the rubber component. Thus, the rubber compositions in the present invention contain a predetermined amount of silica. The amount of silica for each 100 parts by mass of the rubber component is preferably 5 parts by mass or more, more preferably 10 parts by mass or more, still more preferably 12 parts by mass or more, further preferably 15 parts by mass or more, still further preferably 20 parts by mass or more, even further preferably 25 parts by mass or more, particularly preferably 30 parts by mass or more, most preferably 50 parts by mass or more. The amount of silica is also preferably 100 parts by mass or less, more preferably 80 parts by mass or less, still more preferably 75 parts by mass or less, further preferably 70 parts by mass or less, particularly preferably 60 parts by mass or less. If the amount of silica is less than 1 part by mass for each 100 parts by mass of the rubber component, the modified conjugated diene polymer may not perform sufficiently well in the studless winter tire and thus cannot reduce an increase in hardness at low temperatures, and therefore performance on ice and snow tends to be insufficient. Conversely, if the amount of silica is more than 100 parts by mass, as the amount of filler is excessively increased, the filler tends to poorly disperse, resulting in poor abrasion resistance. Additionally, rubber processability may be greatly deteriorated.

The silica is not particularly limited, and may, for example, be dry silica (anhydrous silica) or wet silica (hydrous silica). Wet silica (hydrous silica) is preferred because it contains many silanol groups.

The nitrogen adsorption specific surface area ($N_2SA$) of silica is preferably 80 $m^2/g$ or larger, more preferably 100 $m^2/g$ or larger, still more preferably 110 $m^2/g$ or larger. A silica with a $N_2SA$ of smaller than 80 $m^2/g$ may give insufficient reinforcement and insufficient tensile properties, resulting in insufficient abrasion resistance and insufficient performance on ice and snow. The $N_2SA$ of silica is also preferably 200 $m^2/g$ or smaller, more preferably 190 $m^2/g$ or smaller, still more preferably 185 $m^2/g$ or smaller, particularly preferably 180 $m^2/g$ or smaller. A silica with a $N_2SA$ of larger than 200 $m^2/g$ may be difficult to disperse, which may result in poor abrasion resistance and poor tensile properties and may also make it impossible to sufficiently ensure the low-temperature properties required for studless winter tires.

The $N_2SA$ of silica is determined by the BET method in accordance with ASTM D3037-93.

The average primary particle size of silica is preferably 25 nm or smaller, more preferably 22 nm or smaller, still more preferably 17 nm or smaller. Although the lower limit of the average primary particle size is not particularly limited, it is preferably 3 nm or larger, more preferably 5 nm or larger, still more preferably 7 nm or larger. When silica has an average primary particle size within the range mentioned above, silica dispersibility can be more improved so that reinforcement, tensile properties, and abrasion resistance can be further improved.

The average primary particle size of silica can be determined by observing silica with a transmission or scanning electron microscope, measuring the sizes of 400 or more silica primary particles present within the field of view, and averaging the sizes.

The rubber compositions in the present invention preferably further contain carbon black. The use of carbon black provides a reinforcing effect, and therefore the effect of the present invention can be better achieved. Thus, in another suitable embodiment of the present invention, the rubber composition in the present invention further contains carbon black, i.e., the rubber composition contains carbon black and silica together.

The amount of carbon black for each 100 parts by mass of the rubber component is preferably 3 parts by mass or more, more preferably 5 parts by mass or more, still more preferably 7 parts by mass or more. Less than 3 parts by mass of carbon black may not give sufficient reinforcement and sufficient tensile properties, resulting in insufficient abrasion resistance and insufficient performance on ice and snow. The amount of carbon black is preferably 70 parts by mass or less, more preferably 65 parts by mass or less, still more preferably 40 parts by mass or less, particularly preferably 20 parts by mass or less. The use of carbon black in an amount of more than 70 parts by mass may result in insufficient performance on ice and snow.

In particular, in the case of using the rubber composition in the present invention in a base tread, although the rubber composition may not contain carbon black, the amount of carbon black, when used, is preferably 3 parts by mass or more, more preferably 5 parts by mass or more, but preferably 70 parts by mass or less, more preferably 65 parts by mass or less, for each 100 parts by mass of the rubber component.

The carbon black is not particularly limited, and may be one commonly used in rubber compositions for treads, such as GPF, FEF, HAF, ISAF, and SAF. Preferred among these are ISAF, SAF, and HAF. In the case of using the rubber composition in the present invention in a single-layered tread or a cap tread of a multi-layered tread, ISAF and SAF are more preferred. In the case of using the rubber composition in the present invention in a base tread, on the other hand, HAF is more preferred.

The nitrogen adsorption specific surface area ($N_2SA$) of carbon black is preferably 50 $m^2/g$ or larger, more preferably 90 $m^2/g$ or larger, still more preferably 100 $m^2/g$ or larger, particularly preferably 110 $m^2/g$ or larger. A carbon black with a $N_2SA$ of smaller than 50 $m^2/g$ may not give sufficient reinforcement and sufficient tensile properties, resulting in insufficient abrasion resistance and insufficient performance on ice and snow. The $N_2SA$ is preferably 250 $m^2/g$ or smaller, more preferably 230 $m^2/g$ or smaller, still more preferably 180 $m^2/g$ or smaller, particularly preferably 130 $m^2/g$ or smaller. A carbon black with a $N_2SA$ of larger than 250 $m^2/g$ tends to be difficult to disperse, resulting in poor abrasion resistance and poor tensile properties.

In the case of using the rubber composition in the present invention in a base tread, the $N_2SA$ of carbon black used is preferably 50 $m^2/g$ or larger, more preferably 70 $m^2/g$ or larger, but preferably 250 $m^2/g$ or smaller, more preferably 130 $m^2/g$ or smaller.

The $N_2SA$ of carbon black is measured in accordance with JIS K 6217-2:2001.

The dibutyl phthalate oil absorption (DBP) of carbon black is preferably 50 ml/100 g or more, more preferably 100 ml/100 g or more. A carbon black with a DBP of less than 50 ml/100 g may not give sufficient reinforcement and sufficient tensile properties, resulting in insufficient abrasion resistance and insufficient performance on ice and snow. The DBP of carbon black is also preferably 200 ml/100 g or less, more preferably 135 ml/100 g or less. The use of a carbon black with a DBP of more than 200 ml/100 g may result in reduced processability, reduced abrasion resistance, and reduced tensile properties.

The DBP of carbon black is measured in accordance with JIS K 6217-4:2001.

The rubber compositions in the present invention further contain a silane coupling agent. The silane coupling agent may be any silane coupling agent conventionally used with silica in the rubber industry. Examples include sulfide

silane coupling agents such as bis(3-triethoxysilylpropyl)disulfide, mercapto silane coupling agents such as 3-mercaptopropyltrimethoxysilane, vinyl silane coupling agents such as vinyltriethoxysilane, amino silane coupling agents such as 3-aminopropyltriethoxysilane, glycidoxy silane coupling agents such as γ-glycidoxypropyltriethoxysilane, nitro silane coupling agents such as 3-nitropropyltrimethoxysilane, and chloro silane coupling agents such as 3-chloropropyltrimethoxysilane. Preferred among these are sulfide silane coupling agents, with bis(3-triethoxysilylpropyl)disulfide being more preferred.

The amount of silane coupling agent for each 100 parts by mass of silica is 1 part by mass or more, preferably 3 parts by mass or more. An amount of less than 1 part by mass may not provide sufficient reinforcement and sufficient tensile properties, resulting in insufficient abrasion resistance and insufficient performance on ice and snow. The amount of silane coupling agent is 12 parts by mass or less. The use of more than 15 parts by mass of silane coupling agent tends to fail to produce an effect proportional to the increase in cost.

The rubber compositions in the present invention preferably further contain oil. The use of oil reduces rubber hardness, resulting in better performance on ice and snow. Thus, in another suitable embodiment of the present invention, the rubber composition in the present invention further contains oil. Further, in a particularly suitable embodiment, the rubber composition contains oil in an amount described later.

The oil may, for example, be process oil, vegetable oil or fat, or a mixture thereof. Examples of the process oil include paraffinic process oil, naphthenic process oil, and aromatic process oil (aromatic oil). Examples of the vegetable oil or fat include castor oil, cottonseed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Particularly preferred among these is aromatic oil.

The amount of oil for each 100 parts by mass of the rubber component is preferably 5 parts by mass or more, more preferably 10 parts by mass or more, still more preferably 12 parts by mass or more, further preferably 15 parts by mass or more, particularly preferably 20 parts by mass or more, most preferably 30 parts by mass or more. An amount of less than 5 parts by mass may not provide sufficient performance on ice and snow, and may fail to ensure the flexibility required for studless winter tires. Also, the amount of oil is preferably 80 parts by mass or less, more preferably 60 parts by mass or less, still more preferably 50 parts by mass or less, further preferably 45 parts by mass or less, particularly preferably 40 parts by mass or less. The use of more than 80 parts by mass of oil may deteriorate abrasion resistance and tensile properties. Additionally, it may greatly deteriorate rubber processability.

In particular, when the rubber composition has a high silica content and a high oil content, e.g., contains 20 to 80 parts by mass of silica and 10 to 50 parts by mass of oil for each 100 parts by mass of the rubber component, a balanced improvement in both performance on ice and snow and abrasion resistance can be achieved and, at the same time, especially good rubber processability can be provided.

In the case of using the rubber composition in the present invention in a base tread, the amount of oil for each 100 parts by mass of the rubber component is preferably 5 parts by mass or more, more preferably 10 parts by mass or more, still more preferably 12 parts by mass or more, further preferably 15 parts by mass or more, but preferably 80 parts by mass or less, more preferably 60 parts by mass or less, still more preferably 50 parts by mass or less, particularly preferably 40 parts by mass or less.

The rubber compositions in the present invention further contains vulcanizing agent, such as sulfur, and vulcanization accelerator.

The rubber compositions in the present invention may appropriately contain, in addition to the above components, compounding agents commonly used in the tire industry, such as wax, stearic acid, zinc oxide, antioxidants and other materials.

Examples of the vulcanization accelerators include sulfenamide vulcanization accelerators, thiazole vulcanization accelerators, thiuram vulcanization accelerators, thiourea vulcanization accelerators, guanidine vulcanization accelerators, dithiocarbamate vulcanization accelerators, aldehyde-amine or aldehyde-ammonia vulcanization accelerators, imidazoline vulcanization accelerators, and xanthate vulcanization accelerators. These vulcanization accelerators may be used alone or in combination of two or more. Sulfenamide vulcanization accelerators are preferred among these, and combinations of sulfenamide vulcanization accelerators with guanidine vulcanization accelerators, such as diphenylguanidine, are more preferred, because the effect of the present invention can be more suitably achieved.

Examples of the sulfenamide vulcanization accelerators include N-tert-butyl-2-benzothiazolylsulfenamide (TBBS), N-cyclohexyl-2-benzothiazolylsulfenamide (CBS), and N,N-dicyclohexyl-2-benzothiazolylsulfenamide (DCBS). CBS is preferred among these, and combinations of CBS with guanidine vulcanization accelerators, such as diphenylguanidine, are more preferred, because the effect of the present invention can be more suitably achieved.

The rubber compositions in the present invention may be prepared by conventional methods, specifically, such as by mixing and kneading the components other than the vulcanizing agent and the vulcanization accelerator in a rubber kneading machine such as a Banbury mixer, a kneader, and an open roll mill, and further mixing and kneading the resulting kneaded mixture with the vulcanizing agent and the vulcanization accelerator, followed by vulcanization. The rubber compositions are for use in treads for studless winter tires.

In particular, the rubber compositions are prepared by mixing and kneading the components other than the vulcanizing agent and the vulcanization accelerator in the rubber kneading machine, maintaining them at 150°C to 180°C for 10 to 120 seconds, and further mixing and kneading the resulting kneaded mixture with the vulcanizing agent and the vulcanization accelerator, followed by vulcanization. Since the rubber composition in the present invention is prepared by the above method, silica and the silane coupling agent can more completely react with each other, so that a more balanced improvement in both performance on ice and snow and abrasion resistance can be achieved.

The maintenance temperature is 150°C or higher, preferably 155°C or higher, still more preferably 160°C or higher. If the maintenance temperature is lower than 150°C, silica and the silane coupling agent may not completely react with each other, which cannot be expected to improve performance on ice and snow and abrasion resistance as well as process passability.

The maintenance temperature is also 180°C or lower, preferably 175°C or lower. If the temperature is higher than 180°C, gelation in the rubber may be excessively accelerated, thereby deteriorating processability.

Moreover, the maintenance period is 10 seconds or longer, preferably 15 seconds or longer. If the maintenance period is shorter than 10 seconds, a sufficient effect may not be produced by mixing and kneading the components other than the vulcanizing agent and the vulcanization accelerator and maintaining them at 150°C to 180°C.

The maintenance period is also 120 seconds or shorter, preferably 100 seconds or shorter. The maintenance period longer than 120 seconds cannot be expected to further improve the effect, but may rather be disadvantageous in terms of the trade-off between improvement in the properties and productivity.

That is, according to the present invention, the rubber composition in the present invention further contains a vulcanizing agent and a vulcanization accelerator, and is obtained by mixing and kneading the components other than the vulcanizing agent and the vulcanization accelerator, maintaining them at 150°C to 180°C for 10 to 120 seconds, and further mixing and kneading the resulting kneaded mixture with the vulcanizing agent and the vulcanization accelerator, followed by vulcanization.

The rubber composition (vulcanized rubber composition) in the present invention preferably has a rubber hardness of 40 or higher, more preferably 45 or higher, particularly preferably 48 or higher. The use of the rubber composition with a rubber hardness lower than 40 in a studless winter tire may not ensure sufficient block rigidity and thus may result in greatly deteriorated dry performance. The rubber hardness is also preferably 70 or lower, more preferably 68 or lower, still more preferably 65 or lower, particularly preferably 60 or lower, most preferably 56 or less. The use of the rubber composition with a rubber hardness higher than 70 in a studless winter tire may provide insufficient low-temperature properties and thus may not ensure sufficient performance on ice and snow.

In particular, in the case of using the rubber composition in the present invention in a base tread, the rubber composition preferably has a rubber hardness of 50 or more, more preferably 55 or more, most preferably 60 or more, but preferably 70 or less, more preferably 68 or less, most preferably 65 or less.

The rubber hardness is measured at 0°C with a type A durometer in accordance with JIS K 6253, as described later in Examples.

Thus, in another suitable embodiment of the present invention, the rubber composition has a hardness of 40 to 70 when measured at 0°C with a type A durometer in accordance with JIS K 6253.

The studless winter tire of the present invention may be prepared using the above rubber composition by conventional methods. Specifically, the unvulcanized rubber composition containing the aforementioned components is extruded into a tread or base tread shape and assembled and formed with the other tire components in a tire building machine by a conventional method to build an unvulcanized tire. The unvulcanized tire is heated and pressed in a vulcanizer to form a tire. In this manner, studless winter tires including a tread or base tread containing the aforementioned components can be prepared.

In particular, in the case of preparing a studless winter tire that includes a base tread containing the aforementioned components, since the tread has a multilayered structure, such a tire may be prepared, for example, by forming the unvulcanized rubber composition containing the components into a sheet, and bonding the sheets with each other into a predetermined shape, or by feeding the unvulcanized rubber composition into an extruder with two or more screws to form a sheet including two or more layers at the head exit of the extruder.

The studless winter tires of the present invention can be suitably used for passenger cars, large-sized passenger cars, large-sized SUVs, light trucks, trucks, buses, and the like.

## EXAMPLES

Hereinafter, the present invention will be described in more detail by reference to examples which, however, are not intended to limit the scope of the present invention.

<Synthesis Example 1 (synthesis of conjugated diene polymer) >

A catalyst composition (iodine atom/lanthanoid-containing compound mole ratio = 2.0) was previously prepared by reacting and aging at 30°C for 60 minutes 0.90 mmol of 1,3-butadiene with a cyclohexane solution containing 0.18 mmol of neodymium versatate, a toluene solution containing 3.6 mmol of methylalumoxane, a toluene solution containing 6.7 mmol of diisobutylaluminum hydride, and a toluene solution containing 0.36 mmol of trimethylsilyl iodide. Next, a 5-L autoclave purged with nitrogen was charged with 2.4 kg of cyclohexane and 300 g of 1,3-butadiene. Then, the catalyst composition was added to the autoclave and they were subjected to a polymerization reaction at 30°C for 2 hours, thereby providing a polymer solution. The reaction conversion rate of the charged 1,3-butadiene was almost 100%.

Here, in order to measure the physical properties of the conjugated diene polymer (hereinafter, also referred to as "polymer"), i.e. a polymer before modification, 200 g of the polymer solution was weighed out, and a methanol solution containing 1.5 g of 2,4-di-tert-butyl-p-cresol was added to this polymer solution to terminate the polymerization reaction. Then the solvent was removed from the solution by steam stripping, followed by drying using a roll at 110°C. The dried product thus obtained was used as the polymer.

The physical properties of the polymer were measured by the methods described below. The polymer was found to have a Mooney viscosity ($ML_{1+4}$, 100°C) of 12, a molecular weight distribution (Mw/Mn) of 1.6, a cis-1,4-bond content of 99.2% by mass, and a 1,2-vinyl bond content of 0.21% by mass.

[Mooney viscosity ($ML_{1+4}$, 100°C)]

Mooney viscosity was measured using an L rotor under the conditions: preheating for 1 minute, rotor operation for 4 minutes, and a temperature of 100°C in accordance with JIS K 6300.

[Molecular weight distribution (Mw/Mn)]

Molecular weight distribution was measured using a gel permeation chromatograph (trade name: HLC-8120GPC, TOSOH CORP.) and a differential refractometer as detector under the following conditions, and calibrated using polystyrene standards.

Column: trade name "GMHHXL" × 2 (TOSOH CORP.)
Column temperature: 40°C
Mobile phase: tetrahydrofuran
Flow rate: 1.0 ml/min.
Sample concentration: 10 mg/20 ml

[Cis-1,4-bond content, 1,2-vinyl bond content]

The amount of cis-1,4-bonds and the amount of 1,2-vinyl bonds were measured by $^1$H-NMR analysis and $^{13}$C-NMR analysis. For the NMR analyses, "EX-270" (trade name) from JEOL Ltd. was used. Specifically, in the $^1$H-NMR analysis, a ratio between the 1,4-bonds and the 1,2-bonds in the polymer was calculated from the signal intensities at 5.30 to 5.50 ppm for 1,4-bond and 4.80 to 5.01 ppm for 1,2-bond. Also, in the $^{13}$C-NMR analysis, a ratio between the cis-1,4-bonds and the trans-1,4-bonds in the polymer was calculated from the signal intensities at 27.5 ppm for cis-1,4-bond and 32.8 ppm for trans-1,4-bond. These calculated values were used to determine cis-1,4-bond content (% by mass) and 1,2-vinyl bond content (% by mass) in percentage.

<Preparation Example 1 (synthesis of modified conjugated diene polymer)>

In order to prepare a modified conjugated diene polymer (hereinafter, also referred to as "modified polymer"), the polymer solution of the conjugated diene polymer obtained in Synthesis Example 1 was subjected to the following treatment. To the polymer solution maintained at 30°C was added a toluene solution containing 1.71 mmol of 3-glycidoxypropyltrimethoxysilane, followed by reacting them for 30 minutes to give a reaction solution. To the reaction solution was then added a toluene solution containing 1.71 mmol of 3-aminopropyltriethoxysilane, followed by stirring for 30 minutes. Then, to the reaction solution was added a toluene solution containing 1.28 mmol of tetraisopropyl titanate, followed by stirring for 30 minutes. In order to terminate the polymerization reaction, a methanol solution containing 1.5 g of 2,4-di-tert-butyl-p-cresol was added and the resulting solution was taken as a modified polymer solution. The yield was 2.5 kg. Next, the modified polymer solution was combined with 20 L of an aqueous solution that had been adjusted to have a pH of 10 with sodium hydroxide. The mixture was subjected to solvent removal and a condensation reaction at 110°C for 2 hours. Then, the resulting product was dried using a roll at 110°C. The dried product thus obtained was

used as the modified polymer.

The physical properties of the modified polymer were measured by the methods described below, except that the molecular weight distribution (Mw/Mn) was measured under the same conditions as for the above polymer. The modified polymer was found to have a Mooney viscosity ($ML_{1+4}$, 125°C) of 46, a molecular weight distribution (Mw/Mn) of 2.4, a cold flow of 0.3 mg/min, a temporal stability rating of 2, and a glass transition temperature of -106°C.

[Mooney viscosity ($ML_{1+4}$, 125°C)]

Mooney viscosity was measured using an L rotor under the conditions: preheating for 1 minute, rotor operation for 4 minutes, and a temperature of 125°C in accordance with JIS K 6300.

[Cold flow]

Cold flow was determined by extruding the polymer through a 1/4-inch orifice at a pressure of 3.5 $lb/in^2$ and a temperature of 50°C. After allowing 10 minutes to reach steady state, the rate of extrusion was measured and reported in milligrams per minute (mg/min.).

[Temporal stability]

A temporal stability rating was determined according to the formula below using the Mooney viscosity ($ML_{1+4}$, 125°C) value measured after storage in a 90°C constant temperature bath for 2 days. A lower rating indicates better temporal stability.

Formula: [Mooney viscosity ($ML_{1+4}$, 125°C) after storage in 90°C constant temperature bath for 2 days] - [Mooney viscosity ($ML_{1+4}$, 125°C) measured immediately after synthesis]

[Glass transition temperature]

Glass transition starting temperature was measured using a differential scanning calorimeter (Q200) from TA Instruments Japan Inc. at a temperature increase rate of 10°C/min in accordance with JIS K 7121, and used as the glass transition temperature.

The chemical agents used in examples and comparative examples are listed below.

Natural rubber: RSS#3
Polybutadiene rubber: BR1220 from ZEON Corporation (cis content: 96% by mass)
Modified conjugated diene polymer: modified conjugated diene polymer synthesized in Preparation Example 1
Carbon black I: DIABLACK I (ASTM No. N220, $N_2SA$: 114 $m^2/g$,
DBP: 114 ml/100 g) from Mitsubishi Chemical Corporation Carbon black SH: DIABLACK SH (ASTM No. N347, $N_2SA$: 78 $m^2/g$,
DBP: 128 ml/100 g) from Mitsubishi Chemical Corporation Silica: ULTRASIL VN3 ($N_2SA$: 175 $m^2/g$, average primary particle size: 15 nm) from Evonik Degussa
Silane coupling agent: Si75 (bis(3-triethoxysilylpropyl)disulfide) from Evonik Degussa Oil: Process X-140 (aromatic oil) from Japan Energy Corporation
Stearic acid: stearic acid "Tsubaki" from NOF Corporation Zinc oxide: Zinc oxide #1 from Mitsui Mining & Smelting Co., Ltd.
Antioxidant: Antigene 6C (N-(1,3-dimethylbutyl)-N'-phenyl-p-phenylenediamine) from Sumitomo Chemical Co., Ltd.
Wax: SUNNOC N from Ouchi Shinko Chemical Industrial Co., Ltd.
Sulfur: powdered sulfur from Karuizawa Iou K.K. Vulcanization accelerator 1: NOCCELER CZ (N-cyclohexyl-2-benzothiazolylsulfenamide) from Ouchi Shinko Chemical Industrial Co., Ltd.
Vulcanization accelerator 2: NOCCELER D (N,N'-diphenylguanidine) from Ouchi Shinko Chemical Industrial Co., Ltd.

(Examples 1 to 3 and Comparative Examples 1 to 5)

In accordance with the formulations shown in Table 1, the materials other than the sulfur and the vulcanization accelerators (the chemical agents in amounts shown in Table 1, Step 1) were kneaded at about 150°C for 5 minutes using a 1.7-L Banbury mixer from Kobe Steel, Ltd. to give a kneaded mixture. In the kneading, oil was added in two portions, depending on the formulation. Next, the kneaded mixture was combined with the sulfur and the vulcanization accelerators in amounts shown in Table 1, Step 2. The resulting mixture was kneaded at about 80°C for 3 minutes using an open roll mill to prepare an unvulcanized rubber composition. The unvulcanized rubber composition was formed into a tread shape and assembled with the other tire components on a tire building machine to build an unvulcanized tire. Then, the unvulcanized tire was vulcanized for 15 minutes at 170°C, thereby providing a test studless winter tire (tire for passenger cars with a tire size of 195/65R15 and the DSX-2 pattern).

The following evaluations were performed on the thus obtained test studless winter tires. The results are shown in Table 1.

[Hardness]

In accordance with JIS K 6253 "Rubber, vulcanized or thermoplastic - Determination of hardness", the hardness of a rubber composition specimen cut out of the tread of the test studless winter tire was measured at 0°C with a type A durometer. The values are expressed as an index (hardness index) relative to Comparative Example 1 (=100). A lower index indicates a lower hardness. Tires with an index of 100 or lower are considered to exhibit a reduced increase in hardness at low temperatures.

[Tan δ peak temperature (Tg)]

The unvulcanized rubber compositions obtained in the examples and comparative examples were each press-vulcanized at 165°C for 25 minutes to prepare a vulcanized rubber composition (vulcanized rubber sheet). A temperature dependence curve of tan δ was determined for each of the vulcanized rubber compositions (vulcanized rubber sheets) using a viscoelasticity spectrometer from Iwamoto Seisakusho Co., Ltd. at a frequency of 10 Hz, an initial strain of 10%, an amplitude of ± 0.25%, and a temperature increase rate of 2°C/min. In the temperature dependence curve, the temperature that gives the maximum tan δ is defined as tan δ peak temperature (Tg). As the tan δ peak temperature (Tg) decreases, the increase in hardness becomes small, and grip performance on ice and snow improves.

[Performance on ice and snow]

Each set of test studless winter tires were mounted on a Japanese 2000-cc front-engine, rear-wheel-drive (FR) car, and the car was driven on ice and snow under the conditions mentioned below to evaluate performance on ice and snow. Specifically, performance on ice and snow was evaluated by driving the car on an icy or snowy road, applying the brakes at 30 km/h causing the wheels to lock up, and measuring the distance the car traveled until it stopped (on-ice brake stopping distance, on-snow brake stopping distance). The values are expressed as an index using the equation below. A higher index indicates better performance on ice and snow (grip performance on ice and snow). Tires with an index higher than 100 are considered to have improved performance on ice and snow.

$$\text{(Braking performance (performance on ice and snow) index)} = \text{(Brake stopping distance in Comparative Example 1)}/\text{(Brake stopping distance of each tire)} \times 100$$

| | (On ice) | (On snow) |
|---|---|---|
| Test place | Test track in Nayoro, Hokkaido, Japan | Test track in Nayoro, Hokkaido, Japan |
| Temperature | -1°C to -6°C | -2°C to -10°C |

[Abrasion resistance]

Each set of test studless winter tires were mounted on a Japanese front-engine, front-wheel-drive (FF) car, and the groove depth in the tire tread portion after 8000 km of driving was measured to calculate a distance corresponding

to a 1 mm reduction in the groove depth of the tire. The distance is expressed as an index using the equation below. A higher index indicates better abrasion resistance. Tires with an index higher than 100 are considered to have improved abrasion resistance.

(Abrasion resistance index) = (Distance corresponding to a 1 mm reduction in groove depth)/(Distance corresponding to a 1 mm reduction in tire groove in Comparative Example 1) × 100

[Table 1]

| | | | Example 1 | Example 2 | Example 3 | Comparative Example 1 | Comparative Example 2 | Comparative Example 3 | Comparative Example 4 | Comparative Example 5 |
|---|---|---|---|---|---|---|---|---|---|---|
| Formulation (parts by mass) | Step 1 | Natural rubber | 50 | 40 | 50 | 50 | 40 | 50 | 50 | 50 |
| | | Polybutadiene rubber | — | — | — | 50 | 60 | 50 | 50 | — |
| | | Modified conjugated diene polymer | 50 | 60 | 50 | — | — | — | — | 50 |
| | | Carbon black I | 10 | 10 | 50 | 10 | 10 | 50 | 60 | 60 |
| | | Silica | 50 | 50 | 10 | 50 | 50 | 10 | — | — |
| | | Silane coupling agent | 5 | 5 | 1 | 5 | 5 | 1 | — | — |
| | | Oil | 40 | 40 | 40 | 40 | 40 | 40 | 40 | 40 |
| | | Stearic acid | 2 | 2 | 2 | 2 | 2 | 2 | 2 | 2 |
| | | Zinc oxide | 2 | 2 | 2 | 2 | 2 | 2 | 2 | 2 |
| | | Antioxidant | 3 | 3 | 3 | 3 | 3 | 3 | 3 | 3 |
| | | Wax | 2 | 2 | 2 | 2 | 2 | 2 | 2 | 2 |
| | Step 2 | Sulfur | 1.5 | 1.5 | 1.5 | 1.5 | 1.5 | 1.5 | 1.5 | 1.5 |
| | | Vulcanization accelerator 1 | 1.5 | 1.5 | 1.5 | 1.5 | 1.5 | 1.5 | 1.5 | 1.5 |
| | | Vulcanization accelerator 2 | 1.0 | 1.0 | 1.0 | 1.0 | 1.0 | 1.5 | 1.0 | 1.0 |
| Evaluation | Hardness (0°C, measured value) | | 52.8 | 52.3 | 55.0 | 55.0 | 54.5 | 57.8 | 60.5 | 60.5 |
| | Hardness (0°C, index) | | 96 | 95 | 100 | 100 | 99 | 105 | 110 | 110 |
| | Tg (°C) | | -60 | -62 | -60 | -60 | -62 | -60 | -60 | -60 |
| | Performance on ice and snow | | 110 | 115 | 101 | 100 | 105 | 90 | 85 | 85 |
| | Abrasion resistance | | 105 | 102 | 117 | 100 | 95 | 115 | 120 | 120 |

Examples 1 to 3 are not according to the invention

The results of Table 1 demonstrate that, in the examples in which the rubber compositions contained predetermined amounts of silica and a rubber component including natural rubber and a specific modified conjugated diene polymer, the increase in hardness at low temperatures was reduced, and a balanced improvement in both performance on ice and snow and abrasion resistance could be achieved.

(Examples 4 to 7)

In accordance with the formulations shown in Table 2, the materials other than the sulfur and the vulcanization accelerators (the chemical agents in amounts shown in Table 2, Step 1) were kneaded at about 150°C for 5 minutes using a 1.7-L Banbury mixer from Kobe Steel, Ltd. to give a kneaded mixture. In the kneading, oil was added in two portions, depending on the formulation. Next, the kneaded mixture was combined with the sulfur and the vulcanization accelerators in amounts shown in Table 2, Step 2. The resulting mixture was kneaded at about 80°C for 3 minutes using an open roll mill to prepare an unvulcanized rubber composition. The unvulcanized rubber composition was formed into a tread shape and assembled with the other tire components on a tire building machine to build an unvulcanized tire. Then, the unvulcanized tire was vulcanized for 15 minutes at 170°C, thereby providing a test studless winter tire (tire for passenger cars with a tire size of 195/65R15 and the DSX-2 pattern).

The following evaluations were performed on the thus obtained unvulcanized rubber compositions and test

studless winter tires. The results are shown in Table 2.

[Processability]

An amount of 1 kg of the unvulcanized rubber composition with a width of 20 cm and a thickness of 2 mm was wrapped around an 8-inch open roll, and then kneaded until the temperature of the rubber composition reached 50 ± 10°C, thereby providing a rubber sheet. Then, the rubber sheet was cut and peeled from the roll. The results were assessed according to the criteria below to evaluate processability.

<Evaluation criteria>

Good: The rubber sheet can be peeled off without resistance.
Moderate: The rubber sheet can be peeled off without being torn but with some resistance.
Poor: The rubber sheet is torn upon peeling.

[Hardness]

Hardness was evaluated as described for Table 1.

[Tan δ peak temperature (Tg)]

Tan δ peak temperature was evaluated as described for Table 1.

[Performance on ice and snow]

Performance on ice and snow was evaluated as described for Table 1.

[Abrasion resistance]

Abrasion resistance was evaluated as described for Table 1.

[Table 2]

| | | | Example 4 | Example 5 | Example 6 | Example 7 |
|---|---|---|---|---|---|---|
| Formulation (parts by mass) | Step 1 | Natural rubber | 50 | 50 | 50 | 50 |
| | | Polybutadiene rubber | - | - | - | - |
| | | Modified conjugated diene polymer | 50 | 50 | 50 | 50 |
| | | Carbon black I | 10 | 35 | - | 10 |
| | | Silica | 50 | 25 | 75 | 30 |
| | | Silane coupling agent | 5.0 | 2.5 | 7.5 | 3.0 |
| | | Oil | 40 | 40 | 50 | 15 |
| | | Stearic acid | 2 | 2 | 2 | 2 |
| | | Zinc oxide | 2 | 2 | 2 | 2 |
| | | Antioxidant | 3 | 3 | 3 | 3 |
| | | Wax | 2 | 2 | 2 | 2 |
| | Step 2 | Sulfur | 1.5 | 1.5 | 1.5 | 1.5 |
| | | Vulcanization accelerator 1 | 1.5 | 1.5 | 1.5 | 1.5 |
| | | Vulcanization accelerator 2 | 1.0 | 1.0 | 1.0 | 1.0 |
| Evaluation | Processability | | Good | Good | Good | Good |
| | Hardness (0°C, measured value) | | 52.8 | 55.0 | 52.3 | 50.6 |
| | Hardness (0°C, index) | | 96 | 100 | 95 | 92 |
| | Tg (°C) | | -60 | -60 | -62 | -62 |
| | Performance on ice and snow | | 110 | 102 | 112 | 118 |
| | Abrasion resistance | | 105 | 113 | 108 | 100 |

Examples 4 to 7 are not according to the invention

The results of Table 2 demonstrate that, in the case of the rubber compositions with a high silica content and a high oil content, e.g., containing 20 to 80 parts by mass r of silica and 10 to 50 parts by mass of oil for each 100 parts by mass of the rubber component, the increase in hardness at low temperatures was reduced, a balanced improvement in both performance on ice and snow and abrasion resistance could be achieved, and especially good rubber processability could be provided.

(Examples 8 to 11)

In accordance with the formulations shown in Table 3, the materials other than the sulfur and the vulcanization accelerators (the chemical agents in amounts shown in Table 3, Step 1) were kneaded at about 150°C for 5 minutes using a 1.7-L Banbury mixer from Kobe Steel, Ltd, and then maintained for a maintenance period shown in Table 3 and discharged at a discharging temperature shown in Table 3 to give a kneaded mixture. In the kneading, oil was added in two portions, depending on the formulation. Next, the kneaded mixture was combined with the sulfur and the vulcanization accelerators in amounts shown in Table 3, Step 2. The resulting mixture was kneaded at about 80°C for 3 minutes using an open roll mill to prepare an unvulcanized rubber composition. The unvulcanized rubber composition was formed into a tread shape and assembled with the other tire components on a tire building machine to build an unvulcanized tire. Then, the unvulcanized tire was vulcanized for 15 minutes at 170°C, thereby providing a test studless winter tire (tire for passenger cars with a tire size of 195/65R15 and the DSX-2 pattern).

The following evaluations were performed on the thus obtained unvulcanized rubber compositions and test studless winter tires. The results are shown in Table 3.

[Processability]

An amount of 1 kg of the unvulcanized rubber composition with a width of 20 cm and a thickness of 4 mm was wrapped around an 8-inch open roll, and then kneaded until the temperature of the rubber composition reached 50 ± 10°C, thereby providing a rubber sheet. Then, after the rubber sheet was cut, the surface texture of the rubber sheet was visually observed and determined according to the criteria below to evaluate processability.

<Evaluation criteria>

Good: The rubber sheet has a flat and smooth surface and smooth edges.
Moderate: Although the rubber composition can be formed into a sheet, the sheet has a rough surface and wavy edges.
Poor: The rubber composition cannot be readily formed into a sheet, so that the sheet has an extremely rough surface.

[Hardness]

Hardness was evaluated as described for Table 1.

[Tan δ peak temperature (Tg)]

Tan δ peak temperature was evaluated as described for Table 1.

[Performance on ice and snow]

Performance on ice and snow was evaluated as described for Table 1.

[Abrasion resistance]

Abrasion resistance was evaluated as described for Table 1.

[Table 3]

| | | | Example 8 | Example 9 | Example 10 | Example 11 |
|---|---|---|---|---|---|---|
| Formulation (parts by mass) | Step 1 | Natural rubber | 50 | 50 | 50 | 50 |
| | | Polybutadiene rubber | – | – | – | – |
| | | Modified conjugated diene polymer | 50 | 50 | 50 | 50 |
| | | Carbon black I | 10 | 10 | 10 | 10 |
| | | Silica | 50 | 50 | 50 | 50 |
| | | Silane coupling agent | 5.0 | 5.0 | 5.0 | 5.0 |
| | | Oil | 40 | 40 | 40 | 40 |
| | | Stearic acid | 2 | 2 | 2 | 2 |
| | | Zinc oxide | 2 | 2 | 2 | 2 |
| | | Antioxidant | 3 | 3 | 3 | 3 |
| | | Wax | 2 | 2 | 2 | 2 |
| | Step 2 | Sulfur | 1.5 | 1.5 | 1.5 | 1.5 |
| | | Vulcanization accelerator 1 | 1.5 | 1.5 | 1.5 | 1.5 |
| | | Vulcanization accelerator 2 | 1.0 | 1.0 | 1.0 | 1.0 |
| | Discharging temperature (°C) | | 150 | 170 | 150 | 170 |
| | Maintenance period (sec) | | 15 | 15 | 100 | 100 |
| Evaluation | Processability | | Good | Good | Good | Good |
| | Hardness (0°C, measured value) | | 51.2 | 51.2 | 50.6 | 50.6 |
| | Hardness (0°C, index) | | 93 | 93 | 92 | 92 |
| | Tg (°C) | | −62 | −62 | −62 | −62 |
| | Performance on ice and snow | | 115 | 115 | 117 | 118 |
| | Abrasion resistance | | 108 | 109 | 108 | 109 |

The results of Table 3 demonstrate that, particularly in the case of the rubber compositions prepared by mixing and kneading the components other than the vulcanizing agent and the vulcanization accelerators, maintaining them at 150°C to 180°C for 10 to 120 seconds, and further mixing and kneading the resulting kneaded mixture with the vulcanizing agent and the vulcanization accelerators, followed by vulcanization, the increase in hardness at low temperatures was reduced, and a more balanced improvement in both performance on ice and snow and abrasion resistance could be achieved.

(Examples 12 to 14 and Comparative Examples 6 to 9)

In accordance with the formulations shown in Table 4, the materials other than the sulfur and the vulcanization accelerators (the chemical agents in amounts shown in Table 4, Step 1) were kneaded at about 150°C for 5 minutes using a 1.7-L Banbury mixer from Kobe Steel, Ltd. to give a kneaded mixture. In the kneading, oil was added in two portions, depending on the formulation. Next, the kneaded mixture was combined with the sulfur and the vulcanization accelerators in amounts shown in Table 4, Step 2. The resulting mixture was kneaded at about 80°C for 3 minutes using an open roll mill to prepare an unvulcanized rubber composition. The unvulcanized rubber composition was press-vulcanized using a 2 mm-thick mold at 170°C for 12 minutes to prepare a vulcanized rubber composition. Separately, the unvulcanized rubber composition was formed into a base tread shape and assembled with the other tire components on a tire building machine to build an unvulcanized tire. Then, the unvulcanized tire was vulcanized for 15 minutes at 170°C, thereby providing a test studless winter tire (tire for passenger cars with a tire size of 195/65R15 and the DSX-2 pattern).

The following evaluations were performed on the thus obtained vulcanized rubber compositions and test studless winter tires. The results are shown in Table 4.

[Hardness]

In accordance with JIS K 6253 "Rubber, vulcanized or thermoplastic - Determination of hardness", the hardness of a rubber composition specimen cut out of the base tread of the test studless winter tire was measured at 0°C with a type A durometer. The values are expressed as an index (hardness index) relative to Comparative Example 6 (=100). A lower index indicates a lower hardness. Tires with an index of 100 or lower are considered to exhibit a reduced increase in hardness at low temperatures.

[Performance on ice and snow]

Each set of test studless winter tires were mounted on a Japanese 2000-cc front-engine, rear-wheel-drive (FR) car, and the car was driven on ice and snow under the conditions mentioned below to evaluate performance on ice and snow. Specifically, performance on ice and snow was evaluated by driving the car on an icy or snowy road, applying the brakes at 30 km/h causing the wheels to lock up, and measuring the distance the car traveled until it stopped (on-ice brake stopping distance, on-snow brake stopping distance). The values are expressed as an index using the equation below. A higher index indicates better performance on ice and snow (grip performance on ice and snow). Tires with an index higher than 100 are considered to have improved performance on ice and snow.

(Braking performance (performance on ice and snow) index) = (Brake stopping distance in Comparative Example 6)/(Brake stopping distance of each tire) × 100

| | (On ice) | (On snow) |
|---|---|---|
| Test place | Test track in Nayoro, Hokkaido, Japan | Test track in Nayoro, Hokkaido, Japan |
| Temperature | -1°C to -6°C | -2°C to -10°C |

[Durability]

A No.3 dumbbell-shaped test piece was prepared from the vulcanized rubber composition. The tensile strength at break (TB [MPa]) of the vulcanized rubber composition was measured by performing a tensile test on the test piece in accordance with JIS K 6251 "Rubber, vulcanized or thermoplastic - Determination of tensile stress-strain properties". The values are expressed as an index relative to Comparative Example 6 (=100). A higher index indicates better tensile strength, which in turn indicates better durability. Vulcanized rubber compositions with an index higher than 100 are considered to have improved durability.

[Table 4]

| | | | Example 12 | Example 13 | Example 14 | Comparative Example 6 | Comparative Example 7 | Comparative Example 8 | Comparative Example 9 |
|---|---|---|---|---|---|---|---|---|---|
| Formulation (parts by mass) | Step 1 | Natural rubber | 50 | 50 | 50 | 50 | 50 | 50 | 50 |
| | | Polybutadiene rubber | - | 30 | - | 50 | 50 | 50 | - |
| | | Modified conjugated diene polymer | 50 | 20 | 50 | - | - | - | 50 |
| | | Carbon black SH | - | - | 50 | 60 | - | 30 | 60 |
| | | Silica | 60 | 60 | 10 | - | 60 | 30 | - |
| | | Silane coupling agent | 4.8 | 4.8 | 0.8 | - | 4.8 | 2.4 | - |
| | | Oil | 20 | 20 | 20 | 20 | 20 | 20 | 20 |
| | | Stearic acid | 2 | 2 | 2 | 2 | 2 | 2 | 2 |
| | | Zinc oxide | 2 | 2 | 2 | 2 | 2 | 2 | 2 |
| | | Antioxidant | 3 | 3 | 3 | 3 | 3 | 3 | 3 |
| | | Wax | 2 | 2 | 2 | 2 | 2 | 2 | 2 |
| | Step 2 | Sulfur | 1.5 | 1.5 | 1.5 | 1.5 | 1.5 | 1.5 | 1.5 |
| | | Vulcanization accelerator 1 | 1.5 | 1.5 | 1.5 | 1.5 | 1.5 | 1.5 | 1.5 |
| | | Vulcanization accelerator 2 | 1.0 | 1.0 | 1.0 | 1.0 | 1.0 | 1.5 | 1.0 |
| Evaluation | Hardness (0°C, measured value) | | 53.4 | 53.9 | 54.5 | 55.0 | 53.9 | 54.5 | 54.5 |
| | Hardness (0°C, index) | | 97 | 98 | 99 | 100 | 98 | 99 | 99 |
| | Performance on ice and snow | | 120 | 116 | 105 | 100 | 115 | 107 | 100 |
| | Tensile strength (TB) | | 103 | 100 | 101 | 100 | 85 | 90 | 98 |

Examples 12 to 14 are not according to the invention

The results of Table 4 demonstrate that, in the examples in which the rubber compositions contained predetermined amounts of silica and a rubber component including natural rubber and a specific modified conjugated diene polymer, the increase in hardness at low temperatures was reduced, and a balanced improvement in both performance on ice and snow and durability could be achieved.

## Claims

**1.** A studless winter tire, comprising a tread formed from a rubber composition,
the rubber composition comprising:

a rubber component that includes natural rubber and a modified conjugated diene polymer; and
silica,
1 to 12 parts by mass of a silane coupling agent based on 100 parts by mass of the silica,
the modified conjugated diene polymer being produced by a production method comprising:

a modification step (A) of performing a modification reaction to introduce an alkoxysilane compound having at least two reactive groups including an alkoxysilyl group, into an active chain end of a terminally active conjugated diene polymer with a cis-1,4-bond content of 94.0% by mass or higher; and
a condensation step (B) of performing a condensation reaction on a residue of the alkoxysilane compound introduced into the active chain end, in the presence of a condensation catalyst containing at least one element selected from the group consisting of elements of group 4, group 12, group 13, group 14, and group 15 of the periodic table,
the conjugated diene polymer being polymerized in the presence of a catalyst composition mainly comprising a mixture of components (a) to (c) below,
the modified conjugated diene polymer having a glass transition temperature of -40°C or lower,
the natural rubber and the modified conjugated diene polymer being present in a combined amount of 20

to 100% by mass based on 100% by mass of the rubber component,
the modified conjugated diene polymer being present in an amount of 10 to 90% by mass based on 100% by mass of the rubber component,
the silica being present in an amount of 1 part by mass or more for each 100 parts by mass of the rubber component,
the component (a) being a lanthanoid-containing compound that contains at least one element selected from the group consisting of lanthanoids, or a reaction product obtained by a reaction between the lanthanoid-containing compound and a Lewis base,
the component (b) being at least one compound selected from the group consisting of aluminoxanes and organoaluminum compounds represented by formula (1): $AlR^1R^2R^3$ wherein $R^1$ and $R^2$ are the same as or different from each other and each represent a $C_1$-$C_{10}$ hydrocarbon group or a hydrogen atom, and $R^3$ is the same as or different from $R^1$ and $R^2$ and represents a $C_1$-$C_{10}$ hydrocarbon group,
the component (c) being an iodine-containing compound that contains at least one iodine atom in its molecular structure,
wherein the rubber composition further comprises a vulcanizing agent and a vulcanization accelerator, and is obtained by mixing and kneading the components other than the vulcanizing agent and the vulcanization accelerator, maintaining them at 150°C to 180°C for 10 to 120 seconds, and further mixing and kneading the resulting kneaded mixture with the vulcanizing agent and the vulcanization accelerator, followed by vulcanization.

**2.** The studless winter tire according to claim 1,
wherein the conjugated diene polymer has a ratio (Mw/Mn) of weight average molecular weight (Mw) to number average molecular weight (Mn) determined by gel permeation chromatography of 3.5 or less.

**3.** The studless winter tire according to claim 1 or 2,
wherein the conjugated diene polymer has a 1,2-vinyl bond content of 0.5% by mass or less.

**4.** The studless winter tire according to any one of claims 1 to 3,
wherein the condensation catalyst contains titanium (Ti).

**5.** The studless winter tire according to any one of claims 1 to 4,
wherein the alkoxysilane compound contains at least one functional group selected from the group consisting of the following groups (f) to (i) :

(f) an epoxy group;
(g) an isocyanato group;
(h) a carbonyl group; and
(i) a cyano group.

**6.** The studless winter tire according to any one of claims 1 to 5,
wherein the modification step (A) comprises adding an alkoxysilane compound containing at least one functional group selected from the group consisting of the following groups (j) to (1) :

(j) an amino group;
(k) an imino group; and
(1) a mercapto group.

**7.** The studless winter tire according to any one of claims 1 to 6,
wherein the condensation reaction in the condensation step (B) is performed in an aqueous solution with a pH of 9 to 14 and a temperature of 85°C to 180°C.

**8.** The studless winter tire according to any one of claims 1 to 7,
wherein the modified conjugated diene polymer is formed from at least one conjugated diene compound selected from the group consisting of 1,3-butadiene, isoprene, and 2,3-dimethyl-1,3-butadiene.

**9.** The studless winter tire according to any one of claims 1 to 8,
wherein the silica has a nitrogen adsorption specific surface area of 80 to 200 $m^2/g$.

**10.** The studless winter tire according to any one of claims 1 to 9, wherein the silica is present in an amount of 10 to 80 parts by mass for each 100 parts by mass of the rubber component.

**11.** The studless winter tire according to any one of claims 1 to 10, wherein the rubber composition further comprises oil in an amount of 10 to 50 parts by mass for each 100 parts by mass of the rubber component.

**12.** The studless winter tire according to any one of claims 1 to 11, wherein the rubber composition has a hardness of 40 to 70 when measured at 0°C with a type A durometer in accordance with JIS K 6253.

**13.** A studless winter tire, comprising a base tread formed from a rubber composition, the rubber composition comprising:

a rubber component that includes natural rubber and a modified conjugated diene polymer; and silica,
1 to 12 parts by mass of a silane coupling agent based on 100 parts by mass of the silica,
the modified conjugated diene polymer being produced by a production method comprising:

a modification step (A) of performing a modification reaction to introduce an alkoxysilane compound having at least two reactive groups including an alkoxysilyl group, into an active chain end of a terminally active conjugated diene polymer with a cis-1,4-bond content of 94.0% by mass or higher; and
a condensation step (B) of performing a condensation reaction on a residue of the alkoxysilane compound introduced into the active chain end, in the presence of a condensation catalyst containing at least one element selected from the group consisting of elements of group 4, group 12, group 13, group 14, and group 15 of the periodic table,
the conjugated diene polymer being polymerized in the presence of a catalyst composition mainly comprising a mixture of components (a) to (c) below,
the modified conjugated diene polymer having a glass transition temperature of -40°C or lower,
the natural rubber and the modified conjugated diene polymer being present in a combined amount of 20 to 100% by mass based on 100% by mass of the rubber component,
the modified conjugated diene polymer being present in an amount of 10 to 90% by mass based on 100% by mass of the rubber component,
the silica being present in an amount of 1 part by mass or more for each 100 parts by mass of the rubber component,
the component (a) being a lanthanoid-containing compound that contains at least one element selected from the group consisting of lanthanoids, or a reaction product obtained by a reaction between the lanthanoid-containing compound and a Lewis base,
the component (b) being at least one compound selected from the group consisting of aluminoxanes and organoaluminum compounds represented by formula (1): $AlR^1R^2R^3$ wherein $R^1$ and $R^2$ are the same as or different from each other and each represent a $C_1$-$C_{10}$ hydrocarbon group or a hydrogen atom, and $R^3$ is the same as or different from $R^1$ and $R^2$ and represents a $C_1$-$C_{10}$ hydrocarbon group,
the component (c) being an iodine-containing compound that contains at least one iodine atom in its molecular structure,
wherein the rubber composition further comprises a vulcanizing agent and a vulcanization accelerator, and is obtained by mixing and kneading the components other than the vulcanizing agent and the vulcanization accelerator, maintaining them at 150°C to 180°C for 10 to 120 seconds, and further mixing and kneading the resulting kneaded mixture with the vulcanizing agent and the vulcanization accelerator, followed by vulcanization.

## Patentansprüche

**1.** Spikeloser Winterreifen, der eine aus einer Kautschukzusammensetzung gebildete Lauffläche umfasst, wobei die Kautschukzusammensetzung umfasst:

eine Kautschukkomponente, die Naturkautschuk und modifiziertes konjugiertes Dienpolymer umfasst; und

Silica,
1 bis 12 Masseteile Silankopplungsmittel bezogen auf 100 Masseteile des Silicas,
wobei das modifizierte konjugierte Dienpolymer durch ein Produktionsverfahren hergestellt ist, umfassend:

einen Modifikationsschritt (A) eines Durchführens einer Modifikationsreaktion, um eine Alkoxysilanverbindung mit zumindest zwei reaktiven Gruppen, die eine Alkoxysilylgruppe umfassen, in ein aktives Kettenende eines endseitig aktiven konjugierten Dienpolymers mit einem cis-1,4-Bindungsgehalt von 94,0 Masse-% oder höher einzuführen; und
einen Kondensationsschritt (B) eines Durchführens einer Kondensationsreaktion an einem Rest der Alkoxysilanverbindung, die in das aktive Kettenende eingeführt worden ist, in Gegenwart eines Kondensationskatalysators, der zumindest ein Element enthält, das aus der Gruppe ausgewählt ist, die aus Elementen der Gruppe 4, der Gruppe 12, der Gruppe 13, der Gruppe 14 und der Gruppe 15 des Periodensystems der Elemente besteht,
wobei das konjugierte Dienpolymer in Gegenwart einer Katalysatorzusammensetzung polymerisiert worden ist, die hauptsächlich ein Gemisch aus den nachstehenden Komponenten (a) bis (c) umfasst,
das modifizierte konjugierte Dienpolymer eine Glasübergangstemperatur von -40°C oder niedriger aufweist,
der Naturkautschuk und das modifizierte konjugierte Dienpolymer in einer kombinierten Menge von 20 bis 100 Masse-% bezogen auf 100 Masse-% der Kautschukkomponente vorhanden sind,
das modifizierte konjugierte Dienpolymer in einer Menge von 10 bis 90 Masse-% bezogen auf 100 Masse-% der Kautschukkomponente vorhanden ist,
das Silica in einer Menge von 1 Masseteilen oder mehr für jeweils 100 Masseteile der Kautschukkomponente vorhanden ist,
die Komponente (a) eine Lanthanoid enthaltende Verbindung ist, die zumindest ein Element enthält, das aus der Gruppe ausgewählt ist, die aus Lanthanoiden oder einem Reaktionsprodukt, das durch eine Reaktion zwischen der Lanthanoid enthaltenden Verbindung und einer Lewis-Base erhalten wird, ausgewählt ist,
die Komponente (b) zumindest eine Verbindung ist, die aus der Gruppe ausgewählt ist, die aus Aluminoxanen und Organoaluminiumverbindungen besteht, die durch die Formel (1): $AlR^1R^2R^3$ dargestellt sind, wobei $R^1$ und $R^2$ gleich oder verschieden voneinander sind und jeweils für eine $C_1$-$C_{10}$-Kohlenwasserstoffgruppe oder ein Wasserstoffatom stehen, und $R^3$ gleich oder verschieden von $R^1$ und $R^2$ ist und für eine $C_1$-$C_{10}$-Kohlenwasserstoffgruppe steht,
die Komponente (c) eine Jod enthaltende Verbindung ist, die zumindest ein Jodatom in ihrer Molekülstruktur enthält,
wobei die Kautschukzusammensetzung ferner ein Vulkanisiermittel und einen Vulkanisationsbeschleuniger umfasst und durch Mischen und Kneten der anderen Komponenten als dem Vulkanisationsmittel und dem Vulkanisationsbeschleuniger, Halten derselben bei 150°C bis 180°C für 10 bis 120 Sekunden, und weiter Mischen und Kneten des resultierenden gekneteten Gemisches mit dem Vulkanisiermittel und dem Vulkanisationsbeschleuniger, gefolgt von Vulkanisation erhalten worden ist.

**2.** Spikeloser Winterreifen nach Anspruch 1, wobei das konjugierte Dienpolymer ein durch Gelpermeationschromatographie ermitteltes Verhältnis (Mw/Mn) von gewichtsgemitteltem Molekulargewicht (Mw) zu zahlengemitteltem Molekulargewicht (Mn) von 3,5 oder weniger aufweist.

**3.** Spikeloser Winterreifen nach Anspruch 1 oder 2, wobei das konjugierte Dienpolymer einen 1,2-Vinylbindungsgehalt von 0,5 Masse-% oder weniger aufweist.

**4.** Spikeloser Winterreifen nach einem der Ansprüche 1 bis 3, wobei der Kondensationskatalysator Titan (Ti) enthält.

**5.** Spikeloser Winterreifen nach einem der Ansprüche 1 bis 4, wobei die Alkoxysilanverbindung zumindest eine funktionelle Gruppe enthält, der aus der Gruppe ausgewählt ist, die aus den folgenden Gruppen (f) bis (i) besteht:

(f) einer Epoxygruppe;
(g) einer Isocyanatgruppe;
(h) einer Carbonylgruppe; und
(i) einer Cyanogruppe.

**6.** Spikeloser Winterreifen nach einem der Ansprüche 1 bis 5, wobei der Modifikationsschritt (A) ein Hinzufügen einer Alkoxysilanverbindung umfasst, die zumindest eine funktionelle Gruppe enthält, die aus der Gruppe ausgewählt ist,

die aus den folgenden Gruppen (j) bis (l) besteht:

(j) einer Aminogruppe;
(k) einer Iminogruppe; und
(l) einer Mercaptogruppe.

**7.** Spikeloser Winterreifen nach einem der Ansprüche 1 bis 6, wobei die Kondensationsreaktion in dem Kondensationsschritt (B) in einer wässrigen Lösung mit einem pH von 9 bis 14 und einer Temperatur von 85°C bis 180°C durchgeführt worden ist.

**8.** Spikeloser Winterreifen nach einem der Ansprüche 1 bis 7, wobei das modifizierte konjugierte Dienpolymer aus zumindest einer konjugierten Dienverbindung gebildet ist, die aus der Gruppe ausgewählt ist, die aus 1,3-Butadien, Isopren und 2,3-Dimethyl-1,3-butadien besteht.

**9.** Spikeloser Winterreifen nach einem der Ansprüche 1 bis 8, wobei das Silica eine spezifische Stickstoffadsorptionsoberfläche von 80 bis 200 $m^2/g$ aufweist.

**10.** Spikeloser Winterreifen nach einem der Ansprüche 1 bis 9, wobei das Silica in einer Menge von 10 bis 80 Masseteilen für jeweils 100 Masseteile der Kautschukkomponente vorhanden ist.

**11.** Spikeloser Winterreifen nach einem der Ansprüche 1 bis 10, wobei die Kautschukzusammensetzung ferner Öl in einer Menge von 10 bis 50 Masseteilen für jeweils 100 Masseteile der Kautschukkomponente umfasst.

**12.** Spikeloser Winterreifen nach einem der Ansprüche 1 bis 11, wobei die Kautschukzusammensetzung eine Härte von 40 bis 70 aufweist, wenn bei 0°C mit einem Härtemesser vom Typ A gemäß JIS K 6253 gemessen wird.

**13.** Spikeloser Winterreifen, umfassend eine Basislauffläche, die aus einer Kautschukzusammensetzung gebildet ist, wobei die Kautschukzusammensetzung umfasst:

eine Kautschukkomponente, die Naturkautschuk und modifiziertes konjugiertes Dienpolymer umfasst; und
Silica,
1 bis 12 Masseteile eines Silankopplungsmittels bezogen auf 100 Masseteile des Silicas,
wobei das modifizierte konjugierte Dienpolymer durch ein Produktionsverfahren hergestellt ist, umfassend:

einen Modifikationsschritt (A) eines Durchführens einer Modifikationsreaktion, um eine Alkoxysilanverbindung mit zumindest zwei reaktiven Gruppen, die eine Alkoxysilylgruppe umfassen, in ein aktives Kettenende eines endseitig aktiven konjugierten Dienpolymers mit einem cis-1,4-Bindungsgehalt von 94,0 Masse-% oder höher einzuführen; und
einen Kondensationsschritt (B) eines Durchführens einer Kondensationsreaktion an einem Rest der Alkoxysilanverbindung, die in das aktive Kettenende eingeführt worden ist, in Gegenwart eines Kondensationskatalysators, der zumindest ein Element enthält, das aus der Gruppe ausgewählt ist, die aus Elementen der Gruppe 4, der Gruppe 12, der Gruppe 13, der Gruppe 14 und der Gruppe 15 des Periodensystems der Elemente besteht,
wobei das konjugierte Dienpolymer in Gegenwart einer Katalysatorzusammensetzung polymerisiert worden ist, die hauptsächlich ein Gemisch aus den nachstehenden Komponenten (a) bis (c) umfasst,
das modifizierte konjugierte Dienpolymer eine Glasübergangstemperatur von -40°C oder niedriger aufweist,
der Naturkautschuk und das modifizierte konjugierte Dienpolymer in einer kombinierten Menge von 20 bis 100 Masse-% bezogen auf 100 Masse-% der Kautschukkomponente vorhanden sind,
das modifizierte konjugierte Dienpolymer in einer Menge von 10 bis 90 Masse-% bezogen auf 100 Masse-% der Kautschukkomponente vorhanden ist,
das Silica in einer Menge von 1 Masseteilen oder mehr für jeweils 100 Masseteile der Kautschukkomponente vorhanden ist,
die Komponente (a) eine Lanthanoid enthaltende Verbindung ist, die zumindest ein Element enthält, das aus der Gruppe ausgewählt ist, die aus anthanoiden oder einem Reaktionsprodukt, das durch eine Reaktion zwischen der Lanthanoid enthaltenden Verbindung und einer Lewis-Base erhalten wird, ausgewählt ist,
die Komponente (b) zumindest eine Verbindung ist, die aus der Gruppe ausgewählt ist, die aus Aluminoxanen und Organoaluminiumverbindungen besteht, die durch die Formel (1): $AlR^1R^2R^3$ dargestellt sind, wobei $R^1$ und $R^2$ gleich oder verschieden voneinander sind und jeweils für eine $C_1$-$C_{10}$-Kohlenwasserstoff-

gruppe oder ein Wasserstoffatom stehen, und $R^3$ gleich oder verschieden von $R^1$ und $R^2$ ist und für eine $C_1$-$C_{10}$-Kohlenwasserstoffgruppe steht,
die Komponente (c) eine Jod enthaltende Verbindung ist, die zumindest ein Jodatom in ihrer Molekülstruktur enthält,
wobei die Kautschukzusammensetzung ferner ein Vulkanisiermittel und einen Vulkanisationsbeschleuniger umfasst und durch Mischen und Kneten der anderen Komponenten als dem Vulkanisiermittel und dem Vulkanisationsbeschleuniger, Halten derselben bei 150°C bis 180°C für 10 bis 120 Sekunden, und weiter Mischen und Kneten des resultierenden gekneteten Gemisches mit dem Vulkanisiermittel und dem Vulkanisationsbeschleuniger, gefolgt von Vulkanisation erhalten worden ist.

## Revendications

**1.** Pneu d'hiver sans crampons, comprenant une bande de roulement formée à partir d'une composition de caoutchouc, la composition de caoutchouc comprenant :

un constituant de caoutchouc qui comprend du caoutchouc naturel et un polymère de diène conjugué modifié ; et de la silice,
de 1 à 12 parties en masse d'un agent de couplage de silane rapporté à 100 parties en masse de la silice,
le polymère de diène conjugué modifié étant produit par un procédé de production comprenant :

une étape de modification (A) réalisant une réaction de modification pour introduire un composé d'alcoxysilane ayant au moins deux groupes réactifs incluant un groupe alcoxysilyle, dans une extrémité de chaîne active d'un polymère de diène conjugué actif en terminaison avec une teneur en liaison cis-1,4 de 94,0 % en masse ou supérieure ; et
une étape de condensation (B) réalisant une réaction de condensation sur un résidu du composé d'alcoxysilane introduit dans l'extrémité de chaîne active, en présence d'un catalyseur de condensation contenant au moins un élément choisi dans le groupe constitué d'éléments du groupe 4, groupe 12, groupe 13, groupe 14, et groupe 15 de la classification périodique des éléments,
le polymère de diène conjugué étant polymérisé en présence d'une composition de catalyseur comprenant principalement un mélange de constituants (a) à (c) ci-dessous,
le polymère de diène conjugué modifié ayant une température de transition vitreuse de -40°C ou inférieure,
le caoutchouc naturel et le polymère de diène conjugué modifié étant présents dans une quantité combinée de 20 à 100 % en masse rapporté à 100 % en masse du constituant de caoutchouc,
le polymère de diène conjugué modifié étant présent dans une quantité de 10 à 90 % en masse rapporté à 100 % en masse du constituant de caoutchouc,
la silice étant présente dans une quantité de 1 partie en masse ou supérieure pour à chaque fois 100 parties en masse du constituant de caoutchouc,
le constituant (a) étant un composé contenant un lanthanoïde qui contient au moins un élément choisi dans le groupe constitué de lanthanoïdes, ou d'un produit de réaction obtenu par une réaction entre le composé contenant un lanthanoïde et une base de Lewis,
le constituant (b) étant au moins un composé choisi dans le groupe constitué d'aluminoxanes et de composés d'organoaluminium représentés par la formule (1) : $AlR^1R^2R^3$ où $R^1$ et $R^2$ sont identiques ou différents les uns des autres et représentent chacun un groupe hydrocarboné en $C_1$-$C_{10}$ ou un atome d'hydrogène, et $R^3$ est identique ou différent de $R^1$ et $R^2$ et représente un groupe hydrocarboné en $C_1$-$C_{10}$,
le constituant (c) étant un composé contenant de l'iode qui contient au moins un atome d'iode dans sa structure moléculaire,
dans lequel la composition de caoutchouc comprend de plus un agent de vulcanisation et un accélérateur de vulcanisation, et est obtenue en mélangeant et malaxant les constituants différents de l'agent de vulcanisation et de l'accélérateur de vulcanisation, en les maintenant à de 150°C à 180°C pendant de 10 à 120 secondes, et en mélangeant et en malaxant encore le mélange malaxé résultant avec l'agent de vulcanisation et l'accélérateur de vulcanisation, suivi par une vulcanisation.

**2.** Pneu d'hiver sans crampons selon la revendication 1,
dans lequel le polymère de diène conjugué présente un rapport (Mw/Mn) de masse moléculaire moyenne en masse (Mw) à masse moléculaire moyenne en nombre (Mn) déterminé par chromatographie par perméation sur gel de 3,5 ou inférieur.

3. Pneu d'hiver sans crampons selon la revendication 1 ou 2, dans lequel le polymère de diène conjugué présente une teneur en liaison 1,2-vinyle de 0,5 % en masse ou inférieure.

4. Pneu d'hiver sans crampons selon l'une quelconque des revendications 1 à 3, dans lequel le catalyseur de condensation contient du titane (Ti).

5. Pneu d'hiver sans crampons selon l'une quelconque des revendications 1 à 4, dans lequel le composé d'alcoxysilane contient au moins un groupe fonctionnel choisi dans le groupe constitué des groupes (f) à (i) suivants :

(f) un groupe époxy ;
(g) un groupe isocyanato ;
(h) un groupe carbonyle ; et
(i) un groupe cyano.

6. Pneu d'hiver sans crampons selon l'une quelconque des revendications 1 à 5, dans lequel l'étape de modification (A) comprend l'addition d'un composé d'alcoxysilane contenant au moins un groupe fonctionnel choisi dans le groupe constitué des groupes (j) à (l) suivants :

(j) un groupe amino ;
(k) un groupe imino ; et
(l) un groupe mercapto:

7. Pneu d'hiver sans crampons selon l'une quelconque des revendications 1 à 6, dans lequel la réaction de condensation dans l'étape de condensation (B) est réalisée dans une solution aqueuse avec un pH de 9 à 14 et une température de 85°C à 180°C.

8. Pneu d'hiver sans crampons selon l'une quelconque des revendications 1 à 7, dans lequel le polymère de diène conjugué modifié est formé à partir d'au moins un composé de diène conjugué choisi dans le groupe constitué de 1,3-butadiène, d'isoprène, et de 2,3-diméthyl-1,3-butadiène.

9. Pneu d'hiver sans crampons selon l'une quelconque des revendications 1 à 8, dans lequel la silice présente une surface spécifique d'adsorption d'azote de 80 à 200 $m^2/g$.

10. Pneu d'hiver sans crampons selon l'une quelconque des revendications 1 à 9, dans lequel la silice est présente dans une quantité de 10 à 80 parties en masse pour à chaque fois 100 parties en masse du constituant de caoutchouc.

11. Pneu d'hiver sans crampons selon l'une quelconque des revendications 1 à 10, dans lequel la composition de caoutchouc comprend de plus de l'huile dans une quantité de 10 à 50 parties en masse pour à chaque fois 100 parties en masse du constituant de caoutchouc.

12. Pneu d'hiver sans crampons selon l'une quelconque des revendications 1 à 11, dans lequel la composition de caoutchouc présente une dureté de 40 à 70 lorsqu'elle est mesurée à 0°C avec un duromètre de type A selon JIS K 6253.

13. Pneu d'hiver sans crampons, comprenant une bande de roulement de base formée à partir d'une composition de caoutchouc,
la composition de caoutchouc comprenant :

un constituant de caoutchouc qui comprend du caoutchouc naturel et un polymère de diène conjugué modifié ; et de la silice,
de 1 à 12 parties en masse d'un agent de couplage de silane rapporté à 100 parties en masse de la silice,
le polymère de diène conjugué modifié étant produit par un procédé de production comprenant :

une étape de modification (A) réalisant une réaction de modification pour introduire un composé d'alcoxysilane ayant au moins deux groupes réactifs incluant un groupe alcoxysilyle, dans une extrémité de chaîne active d'un polymère de diène conjugué actif en terminaison avec une teneur en liaison cis-1,4 de 94,0 %

en masse ou supérieure ; et
une étape de condensation (B) réalisant une réaction de condensation sur un résidu du composé d'alcoxysilane introduit dans l'extrémité de chaîne active, en présence d'un catalyseur de condensation contenant au moins un élément choisi dans le groupe constitué d'éléments du groupe 4, groupe 12, groupe 13, groupe 14, et groupe 15 de la classification périodique des éléments,
le polymère de diène conjugué étant polymérisé en présence d'une composition de catalyseur comprenant principalement un mélange de constituants (a) à (c) ci-dessous,
le polymère de diène conjugué modifié ayant une température de transition vitreuse de -40°C ou inférieure,
le caoutchouc naturel et le polymère de diène conjugué modifié étant présents dans une quantité combinée de 20 à 100 % en masse rapporté à 100 % en masse du constituant de caoutchouc,
le polymère de diène conjugué modifié étant présent dans une quantité de 10 à 90 % en masse rapporté à 100 % en masse du constituant de caoutchouc,
la silice étant présente dans une quantité de 1 partie en masse ou supérieure pour à chaque fois 100 parties en masse du constituant de caoutchouc,
le constituant (a) étant un composé contenant un lanthanoïde qui contient au moins un élément choisi dans le groupe constitué de lanthanoïdes, ou d'un produit de réaction obtenu par une réaction entre le composé contenant un lanthanoïde et une base de Lewis,
le constituant (b) étant au moins un composé choisi dans le groupe constitué d'aluminoxanes et de composés d'organoaluminium représentés par la formule (1) : $AlR^1R^2R^3$ où $R^1$ et $R^2$ sont identiques ou différents les uns des autres et représentent chacun un groupe hydrocarboné en $C_1$-$C_{10}$ ou un atome d'hydrogène, et $R^3$ est identique ou différent de $R^1$ et $R^2$ et représente un groupe hydrocarboné en $C_1$-$C_{10}$,
le constituant (c) étant un composé contenant de l'iode qui contient au moins un atome d'iode dans sa structure moléculaire,
dans lequel la composition de caoutchouc comprend de plus un agent de vulcanisation et un accélérateur de vulcanisation, et est obtenue en mélangeant et malaxant les constituants différents de l'agent de vulcanisation et de l'accélérateur de vulcanisation, en les maintenant à de 150°C à 180°C pendant de 10 à 120 secondes, et en mélangeant et en malaxant encore le mélange malaxé résultant avec l'agent de vulcanisation et l'accélérateur de vulcanisation, suivi par une vulcanisation.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20110015302 A1
- EP 2098541 A1
- EP 2404944 A1
- EP 1958971 A1
- EP 2042549 A1
- EP 2193938 A1
- EP 2407507 A1
- EP 2098540 A1


### Non-patent literature cited in the description


- *Fine Chemicals,* 1994, vol. 23 (9), 5
- *J. Am. Chem. Soc.,* 1993, vol. 115, 4971
- *J. Am. Chem. Soc.,* 1995, vol. 117, 6465